(19) Europäisches Patentamt
European Patent Office
Office européen des brevets

(11) **EP 2 360 546 B1**

(12) **EUROPÄISCHE PATENTSCHRIFT**

(45) Veröffentlichungstag und Bekanntmachung des Hinweises auf die Patenterteilung:
16.10.2019  Patentblatt 2019/42

(21) Anmeldenummer: **10154537.4**

(22) Anmeldetag: **24.02.2010**

(51) Int Cl.:
***G05F 1/67*** *(2006.01)*

(54) **Verfahren zum Ermitteln eines Punktes maximaler Leistung von Photovoltaikgeneratoren**

Method for determining a point of maximum performance of photovoltaic generators

Procédé de détermination d'un point de puissance maximale de générateurs photovoltaïques

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**24.08.2011  Patentblatt 2011/34**

(73) Patentinhaber: **SMA Solar Technology AG 34266 Niestetal (DE)**

(72) Erfinder:
- **Hopf, Dipl.-Ing. Markus**
  **34314 Espenau (DE)**
- **Bettenwort, Dr.-Ing. Gerd**
  **34119, Kassel (DE)**
- **Klein, Dr. rer. nat. Jens**
  **37075 Göttingen (DE)**

(56) Entgegenhaltungen:
**ES-A1- 2 326 200     US-A- 6 057 665**

- PATEL H ET AL: "Maximum Power Point Tracking Scheme for PV Systems Operating Under Partially Shaded Conditions" IEEE TRANSACTIONS ON INDUSTRIAL ELECTRONICS, IEEE SERVICE CENTER, PISCATAWAY, NJ, USA, Bd. 55, Nr. 4, 1. April 2008 (2008-04-01), Seiten 1689-1698, XP011203288 ISSN: 0278-0046

- SYED MUHAMMAD RAZA KAZMI ET AL: "An improved and very efficient MPPT controller for PV systems subjected to rapidly varying atmospheric conditions and partial shading" POWER ENGINEERING CONFERENCE, 2009. AUPEC 2009. AUSTRALASIAN UNIVERSITIES, IEEE, PISCATAWAY, NJ, USA, 27. September 2009 (2009-09-27), Seiten 1-6, XP031582483 ISBN: 978-1-4244-5153-1

- BEKKER B ET AL: "Finding an optimal PV panel maximum power point tracking method" AFRICON, 2004. 7TH AFRICON CONFERENCE IN AFRICA GABORONE, BOTSWANA SEPT. 15-17, 2004, PISCATAWAY, NJ, USA,IEEE LNKD-DOI:10.1109/AFRICON.2004.1406864, Bd. 2, 15. September 2004 (2004-09-15), Seiten 1125-1130, XP010780593 ISBN: 978-0-7803-8605-1

- AHMED ET AL: "A novel maximum power point tracking for photovoltaic applications under partially shaded insolation conditions" ELECTRIC POWER SYSTEMS RESEARCH, ELSEVIER LNKD-DOI:10.1016/J.EPSR.2007.05.026, Bd. 78, Nr. 5, 1. März 2008 (2008-03-01), Seiten 777-784, XP022507406 ISSN: 0378-7796

- ESRAM T ET AL: "Comparison of Photovoltaic Array Maximum Power Point Tracking Techniques" IEEE TRANSACTIONS ON ENERGY CONVERSION, IEEE SERVICE CENTER, PISCATAWAY, NJ, US LNKD-DOI:10.1109/TEC.2006.874230, Bd. 22, Nr. 2, 1. Juni 2007 (2007-06-01), Seiten 439-449, XP011184738 ISSN: 0885-8969

## Beschreibung

Die Erfindung betrifft ein Verfahren nach dem Oberbegriff des Anspruchs 1.

Photovoltaikgeneratoren (PV = Photovoltaik) erzeugen infolge von Lichteinstrahlung elektrische Energie. Um von den Photovoltaikgeneratoren erzeugte Gleichspannung in ein öffentliches Versorgungsnetz einspeisen zu können, sind Wechselrichter erforderlich. Bei der Betriebsführung dieses Wechselrichters erfolgt mittels eines sogenannten "Punkt maximaler Leistung MPP-Trackers" ständig ein Nachregeln der Leistungsentnahme, so dass ein der Photovoltaikgenerator möglichst ständig im Punkt der maximalen Leistungsentnahme "MPP" (Maximum Power Point) betrieben wird. Dieser MPP-Tracker variiert hierzu den entnommenen Strom oder die Spannung um einen kleinen Betrag, errechnet jeweils das Produkt aus Strom und Spannung, und stellt den Strom- oder Spannungswert in Richtung höherer Leistung nach. Der angestrebte optimale MPP-Punkt der I-U-Kennlinie bildet das globale Maximum der P-U-Kennlinie.

Im Falle einer partiellen Verschattung eines Photovoltaikgenerators entsteht oftmals mehr als ein lokales Maximum in der P-U-Kennlinie. Den meisten MPP-Tracking-Verfahren (MPP: Maximum Power Point; dt: Punkt maximaler Leistung) ist es dabei jedoch nicht möglich, zwischen lokalen und globalem Maxima zu unterscheiden. In der Praxis kann dies in Abhängigkeit von der Entstehungsgeschichte der Schattenbildung zu Ertragseinbußen führen, wenn der MPP-Tracker in den lokalen MPP läuft und dort verweilt.

Bei einer Suche über den gesamten Betriebsbereich einer Anlage können energetische Verluste entstehen. Eine Verminderung von Verlusten kann durch eine Beschränkung von durchsuchten Bereichen erfolgen.

Ein Aspekt der Erfindung besteht daher darin, ein optimiertes Verfahren zum Ermitteln eines Punktes maximaler Leistung von Photovoltaikgeneratoren zu schaffen. Hierzu dienen jeweils die Verfahren mit den Merkmalen der Ansprüche 1 und 2.

Durch das Verfahren werden bei einer Suche nach einem Punkt höherer Leistung, das heißt nach dem globalen Punkt maximaler Leistung MPP, durch intelligentes Einschränken des Suchbereichs die während der Suche auftretenden Verluste minimiert. Die Voraussetzung ist hierbei, dass sich der globale Punkt maximaler Leistung MPP weiterhin im eingeschränkten Suchbereich befindet. Das heißt, dass die Suche nach einem Punkt höherer Leistung durch Verwendung von definierten Kriterien dann beendet werden soll, wenn bei Beibehaltung der Suchrichtung keine Aussicht auf eine Leistungszunahme mehr besteht. Die Suchdauer und die während der Suche entstehenden Verluste können, in Abhängigkeit vom Betriebszustand des Photovoltaikgenerators sowie von den technischen Daten des PV-Wechselrichters, auf diese Weise zum Teil erheblich reduziert werden. Zum Beispiel erfolgt eine Suche durch Hoch- und Runterrampen der PV-Spannung.

Anspruch 1 schafft ein bevorzugtes Verfahren zum Ermitteln eines globalen Punktes maximaler Leistung (MPP) eines Photovoltaikgenerators (PV) durch ein Variieren von wenigstens einem Parameter der beiden Parameter Suchspannung und Suchstrom mittels einer dem Photovoltaikgenerator nachgeschalteten Einrichtung, innerhalb eines maximal absuchbaren Suchgebietes auf einer Leistungs-/Spannungskurve, mit folgenden Verfahrensschritten:

a) Initialisieren durch Festlegen eines Startpunktes mit einer Startleistung mit einer Startspannung und einem Startstrom;
b) Suchen des globalen Punktes maximaler Leistung (MPP) in nur einer Suchrichtung (5, 6) durch wiederholtes Variieren der Suchspannung oder des Suchstroms in dem Suchgebiet unter Berücksichtigung von mindestens zwei einschränkenden Bedingungen zur Einschränkung des Suchgebietes; und
c) Beenden der Suche, wenn eine der mindestens zwei einschränkenden Bedingungen zur Einschränkung des Suchgebietes in Schritt b) erfüllt ist.

Anspruch 2 schafft nach eine anderen vorteilhaften und bevorzugten Variante ein Verfahren zum Ermitteln eines globalen Punktes maximaler Leistung (MPP) eines Photovoltaikgenerators (PV) durch ein Variieren von wenigstens einem Parameter der beiden Parameter Suchspannung und Suchstrom mittels einer dem Photovoltaikgenerator nachgeschalteten Einrichtung, innerhalb eines maximal absuchbaren Suchgebietes auf einer Leistungs-/Spannungskurve, mit folgenden Verfahrensschritten:

a) Initialisieren durch Festlegen eines Startpunktes mit einer Startleistung mit einer Startspannung und einem Startstrom;
b) Suchen des globalen Punktes maximaler Leistung (MPP) in einer ersten Suchrichtung durch wiederholtes Variieren der Suchspannung oder des Suchstroms in dem Suchgebiet unter Berücksichtigung mindestens einer ersten einschränkenden Bedingung zur Einschränkung des Suchgebietes;
c) Beenden der Suche in der ersten Suchrichtung, wenn die erste einschränkende Bedingung zur Einschränkung des Suchgebietes in Schritt b) erfüllt ist;
d) sodann Suchen des globalen Punktes maximaler Leistung (MPP) in einer zweiten Suchrichtung durch wiederholtes Variieren der Suchspannung oder des Suchstroms in dem Suchgebiet unter Berücksichtigung mindestens einer zweiten einschränkenden Bedingung zur Einschränkung des Suchgebietes; und

e) Beenden der Suche in die zweite Suchrichtung, wenn die zweite einschränkende Bedingung zur Einschränkung des Suchgebietes in Schritt d) erfüllt ist,

wobei nach dem Beenden der Suche der globale Punkt mit der maximal ermittelten Leistung eingestellt wird.

Bei dem Verfahren nach Anspruch 1 ist als ein Vorteil die besondere Effizienz, durch die Berücksichtigung von zwei oder mehr einschränkenden Bedingungen zur Einschränkung des Suchbereiches, hervorzuheben.

Bei dem Verfahren nach Anspruch 2 ist als ein Vorteil die besondere Effizienz, durch die Berücksichtigung von zwei Suchrichtungen und wenigstens einer oder mehr einschränkenden Bedingungen zur Einschränkung des Suchbereiches, hervorzuheben.

Nach einer bevorzugten - nicht aber zwingenden - Variante werden auch nach Anspruch 2 zwei oder mehr einschränkende Bedingungen zur Einschränkung eines Suchbereichs bei der Suche berücksichtigt, um die Effizienz weiter zu erhöhen.

Besonders bevorzugt kann die mindestens eine einschränkende Bedingung zur Einschränkung eines Suchbereichs eine logisch ermittelte Abbruchbedingung umfassen, die aussagt, dass bei Beibehaltung einer Suchrichtung keine Aussicht auf eine Leistungszunahme bestehen kann. Derart werden Leistungsverluste durch das MPP Verfahren verringert.

Dabei ist es weiter vorteilhaft, wenn mindestens eine der einschränkenden Bedingungen zur Einschränkung des Suchbereichs unter Auswertung der in einem während der Suche bereits erreichten Betriebszustand gegebenen Parameter ermittelt wird oder werden, denn derart wird das Verfahren stets aktuell an den gegebenen Betriebszustand angepasst.

Es ist nach einer weiteren bevorzugten Variante zweckmäßig, wenn die wenigstens eine oder mehreren einschränkenden Bedingung(en) zur Einschränkung des Suchbereichs unter Auswertung der in einem herrschenden Betriebszustand gegebenen Parameter anhand einer Bestimmung von einer Randbedingung oder von mehreren Randbedingungen ermittelt wird, die aufgrund physikalischer Randbedingungen in diesem Betriebszustand gegeben sein müssen.

Es ist nach einer optionalen Variante der Erfindung vorteilhaft, wenn das Suchen in der ersten Suchrichtung als eine rechtsseitige Suche erfolgt, bei der von einem Startpunkt aus wiederholt schrittweise die Suchspannung erhöht oder der Suchstrom erniedrigt werden kann.

Es ist nach einer weiteren optionalen Variante ferner vorteilhaft, wenn das Suchen in der zweiten Suchrichtung als eine linksseitige Suche erfolgt, bei der von einem Startpunkt aus wiederholt schrittweise die Suchspannung erniedrigt oder der Suchstrom erhöht wird.

Es ist besonders vorteilhaft und erhöht die Genauigkeit des MPP-Verfahrens, wenn die Erfüllung einer der einschränkenden Bedingungen zur Einschränkung des Suchbereichs während des Ablaufes des Verfahrens fortlaufend neu geprüft wird.

Dabei kann die mindestens eine einschränkende Bedingung zur Einschränkung eines Suchbereichs eine logisch ermittelte Abbruchbedingung umfassen, die aussagt, dass bei Beibehaltung einer Suchrichtung eine Mindestleistung unterschritten wird.

Es ist zweckmäßig, wenn die mindestens eine einschränkende Bedingung eine Abbruchbedingung ist, welche einen oder mehrere folgender Parameter einzeln oder verknüpft berücksichtigt:

$U_{pv}$ := aktuelle Photovoltaikgeneratorspannung,

$I_{pv}$ := aktueller Photovoltaikgeneratorstrom,

$P_{pv}$ := aktuelle Photovoltaikgeneratorleistung,

$P_{min}$ := eine einzuhaltende Mindestleistung des Photovoltaikgenerators,

$P_{max}$ := während einer Suche bisher gefundene maximale Leistung und

$I_{such}$ := maximaler Suchstrom (oder maximaler Wechselrichter PV-Strom),

$U_{such}$ := maximale Suchspannung ,

$P_{nenn}$ := Nennleistung des Photovoltaikgenerators,

$k_i$ := Faktor MPP-Strom/Kurzschlussstrom eines entsprechendem Zelltyp.

Nach Auffinden eines Punktes höherer Leistung während einer rechtsseitigen Suche kann die linksseitige Suche entfallen, wenn das Produkt aus Startspannung und Suchstrom kleiner als eine maximale oder gleich einer maximalen Leistung ist, oder dass nach Auffinden eines Punktes höherer Leistung während einer linksseitigen Suche kann die rechtsseitige Suche entfallen, wenn das Produkt aus Startstrom und Suchspannung kleiner als eine maximale oder gleich einer maximalen Leistung ist.

Vorzugsweise - aber nicht zwingen - wird vor Beginn einer Suche eine Suchrichtung ausgewählt.

Es wird vorzugsweise die rechtsseitige Suche ausgewählt, wenn die maximal mögliche Leistung bei rechtsseitiger Suche größer als die maximal mögliche Leistung bei linksseitiger Suche ist, und umgekehrt.

Es ist aber auch denkbar, dass dann, wenn die maximal mögliche Leistung bei linksseitiger Suche und die maximal mögliche Leistung bei rechtsseitiger Suche gleich sind, ein Auswählen einer Suchrichtung per Zufall erfolgt.

Vorzugsweise erfolgt ein Speichern des jeweils ermittelten Punktes maximaler Leistung und oder der Spannung in diesem Punkt und oder des Stroms in diesem Punkt

Zudem ist es zweckmäßig, wenn nach Beenden der Suche der Punkt mit der maximal ermittelten Leistung eingestellt wird.

Zum Gegenstand des Anspruchs 2 ist anzumerken, dass das Suchen in der zweiten Suchrichtung ggf. auch entfallen kann, wenn eine einschränkende Bedingung zur Einschränkung des Suchgebietes erfüllt ist.

Vorzugsweise ist im Anspruch 2 die erste einschränkende Bedingung unterschiedlich zur zweiten einschränkenden Bedingung.

In einer besonders vorteilhaften Variante des Verfahrens werden Bedingungen zur Einschränkung des Suchbereichs schon vor einer Suche definiert. Dies vereinfacht die Suche weiter.

In einer weiteren bevorzugten Variante wird berücksichtigt, dass eine definierte Mindestleistung während der Suche nicht unterschritten werden darf. Dies ist beispielsweise vorteilhaft, wenn die zum Betrieb des PV-Wechselrichters benötigte Leistung lediglich über einen PV-String bezogen wird, beziehungsweise nicht über das einzuspeisende Netz bezogen werden soll oder kann.

Das Verfahren zur Suche nach einem Punkt höherer bzw. maximaler Leistung mit eingeschränktem Suchbereich kann unter anderem dazu genutzt werden, um ein bestehendes Trackingverfahren in den globalen Punkt maximaler Leistung MPP zu überführen oder um einen Startpunkt für ein Trackingverfahren zu finden, es ist aber auch selbst als das eigentliche Trackingverfahren eines Wechselrichters nutzbar.

In weiterer Ausführung kann beim Festlegen des Startpunktes eine Startspannung, ein Startstrom, eine maximale Suchspannung und ein maximaler Suchstrom festgelegt werden. Diese Werte können während der Suche aktualisiert werden, wodurch eine Suchzeit verkürzt wird.

Das Suchen in der ersten Suchrichtung wird durch Anheben einer Suchspannung oder Absenken eines Suchstroms und das Suchen in der zweiten Suchrichtung durch Absenken einer Suchspannung und Anheben eines Suchstroms ausgeführt. Dabei erfolgt das Anheben und Absenken kontinuierlich oder in festlegbaren Schritten.

Die mindestens eine einschränkende Bedingung zur Einschränkung eines Suchbereichs ist eine Abbruchbedingung, wenn bei Beibehaltung einer Suchrichtung eine Aussicht auf eine Leistungszunahme nicht besteht, wodurch das Verfahren gegenüber bekannten Verfahren verkürzt wird.

Eine weitere Effizienzsteigerung ergibt sich, wenn vor Beginn einer Suche eine Suchrichtung ausgewählt wird. Dies kann zum Beispiel anhand der maximal möglichen Leistung bei linksseitiger Suche und der maximal möglichen Leistung bei rechtsseitiger Suche erfolgen. So kann z.B. die rechtsseitige Suche ausgewählt werden, wenn die maximal mögliche Leistung bei rechtsseitiger Suche größer als die maximal mögliche Leistung bei linksseitiger Suche ist, und umgekehrt. Besteht kein wesentlicher Unterschied in den maximal möglichen Leistungen, kann eine Suchrichtung per Zufall ausgewählt werden. Gegebenenfalls kann nach Durchführung der Suche in der ausgewählten Suchrichtung eine Suche in entgegengesetzte Richtung entfallen.

Es ist ferner sinnvoll, wenn mehrere der einschränkenden Bedingungen miteinander kombiniert werden.

Die Erfindung wird nun anhand einer beispielhaften Ausführung mit Bezug auf die beigefügten Zeichnungen näher erläutert. Hierbei zeigen:

Figur 1    ein beispielhaftes Ersatzschaltbild eines Photovoltaikgenerators;

Figur 2    eine grafische Darstellung beispielhafter PU-Kennlinien eines Photovoltaikgenerators;

Figur 3a    eine grafische Darstellung für ein Beispiel einer zeitlichen Veränderung einer Spannung für eine Suche nach einem globalen Punkt maximaler Leistung MPP;

Figur 3b    eine zu Fig. 3a korrespondierende Leistungskurve zur Veranschaulichung von Verlusten bei einer Suche;

Figur 4a    ein Ablaufdiagramm eines ersten Ausführungsbeispiels eines erfindungsgemäßen Verfahrens zum Auffinden eines Punktes maximaler Leistung MPP;

Figur 4b    ein Ablaufdiagramm eines zweiten Ausführungsbeispiels des erfindungsgemäßen Verfahrens zum Auffinden eines Punktes maximaler Leistung MPP;

Figur 5    eine beispielhafte grafische Darstellung einer Durchführung einer rechtsseitigen Suche bei Spannungsvorgabe;

Figur 6a      ein beispielhaftes Ablaufdiagramm für rechtsseitige Suche mit Spannungsvorgabe;

Figur 6b      ein beispielhaftes Ablaufdiagramm für rechtsseitige Suche mit Stromvorgabe;

Figur 7      eine beispielhafte grafische Darstellung einer Durchführung einer linksseitigen Suche bei Spannungsvorgabe;

Figur 8a      ein beispielhaftes Ablaufdiagramm für linksseitige Suche mit Spannungsvorgabe;

Figur 8b      ein beispielhaftes Ablaufdiagramm für linksseitige Suche mit Stromvorgabe;

Figur 9      eine grafische Darstellung zur Veranschaulichung eines Punktes maximaler Leistung MPP bei unverschatteter IU-Kennlinie;

Figur 10      eine weitere beispielhafte grafische Darstellung einer Durchführung einer rechtsseitigen Suche bei Berücksichtigung der Nennleistung des angeschlossenen PV-Generators mit Spannungsvorgabe;

Figur 11a      ein beispielhaftes Ablaufdiagramm für rechtsseitige Suche bei Berücksichtigung der Nennleistung des angeschlossenen PV-Generators mit Spannungsvorgabe nach Fig. 10;

Figur 11b      ein beispielhaftes Ablaufdiagramm für rechtsseitige Suche bei Berücksichtigung der Nennleistung des angeschlossenen PV-Generators mit Stromvorgabe nach Fig. 10;

Figur 12      eine weitere grafische Darstellung zur Veranschaulichung eines Punktes maximaler Leistung MPP bei unverschatteter IU-Kennlinie;

Figur 13      eine weitere beispielhafte grafische Darstellung einer Durchführung einer linksseitigen Suche bei Berücksichtigung der Nennleistung des angeschlossenen PV-Generators mit Spannungsvorgabe;

Figur 14a      ein beispielhaftes Ablaufdiagramm für linksseitige Suche bei Berücksichtigung der Nennleistung des angeschlossenen PV-Generators mit Spannungsvorgabe nach Fig. 13;

Figur 14b      ein beispielhaftes Ablaufdiagramm für linksseitige Suche bei Berücksichtigung der Nennleistung des angeschlossenen PV-Generators mit Stromvorgabe nach Fig. 13;

Figur 15      eine beispielhafte grafische Darstellung zur Herleitung einer Suchbereichseinschränkung zur Gewährleistung einer definierten Mindestleistung bei einer rechtsseitigen Suche;

Figur 16      eine beispielhafte grafische Darstellung zur Herleitung einer Suchbereichseinschränkung zur Gewährleistung einer definierten Mindestleistung bei einer linksseitigen Suche;

Figur 17      eine beispielhafte grafische Darstellung zur Veranschaulichung eines Entfalls der Suche in der entgegengesetzten Richtung bei einer rechtsseitigen Suche;

Figur 18      ein beispielhaftes Ablaufdiagramm für rechtsseitige Suche nach Fig. 17;

Figur 19      eine beispielhafte grafische Darstellung zur Veranschaulichung eines Entfalls der Suche in der entgegengesetzten Richtung bei einer linksseitigen Suche;

Figur 20      ein beispielhaftes Ablaufdiagramm für rechtsseitige Suche nach Fig. 19;

Figur 21      eine beispielhafte grafische Darstellung zur Veranschaulichung einer Auswahl der Suchrichtung mit anfänglicher rechtsseitiger Suche;

Figur 22      ein beispielhaftes Ablaufdiagramm bei Auswahl der Suchrichtung nach Fig. 21;

Figur 23      eine beispielhafte grafische Darstellung zur Veranschaulichung einer Auswahl der Suchrichtung mit anfänglicher linksseitiger Suche

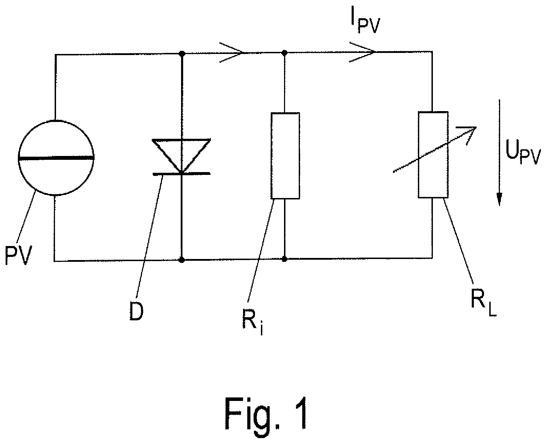

In Fig. 1 ist ein beispielhaftes Ersatzschaltbild einer Anlage zur Energieerzeugung dargestellt.

Ein Photovoltaikgenerator PV - der beispielsweise aus einem oder mehreren Strings von Siliziumsolarzellen besteht - ist als eine Stromquelle PV' dargestellt, die parallel zu einer Diode D geschaltet ist und zu einem Widerstand Ri. An ihren Anschlüssen ist eine veränderliche Last RL angeschlossen, die von dem Strom Ipv des PV-Moduls durchflossen wird, und an welcher eine Spannung Upv abfällt.

Dem Photovoltaikgenerator ist in der Regel als veränderliche Last RL eine Einrichtung, vorzugsweise eine insgesamt als "Wechselrichter" bezeichnete Anordnung aus beispielsweise einem DC/DC-Wandler und einem DC/AC-Wechselrichter, nachgeschaltet, wobei am DC/DC-Wandler eine Einstellung des optimalen Arbeitspunktes bzw. Punktes maximaler Leistung MPP auf einer Leistungs-/Spannungskennlinie des Photovoltaikgenerators PV mittels eines sogenannten MPP-Trackers bzw. eines MPP-Trackingverfahrens erfolgt, welches am DC/DC-Wandler vorzugsweise mittels eines Mikroprozessors, welcher den DC-/DC-Wandler steuert, ausgeführt wird bzw. abläuft.

Dies sei nachfolgend näher beschrieben.

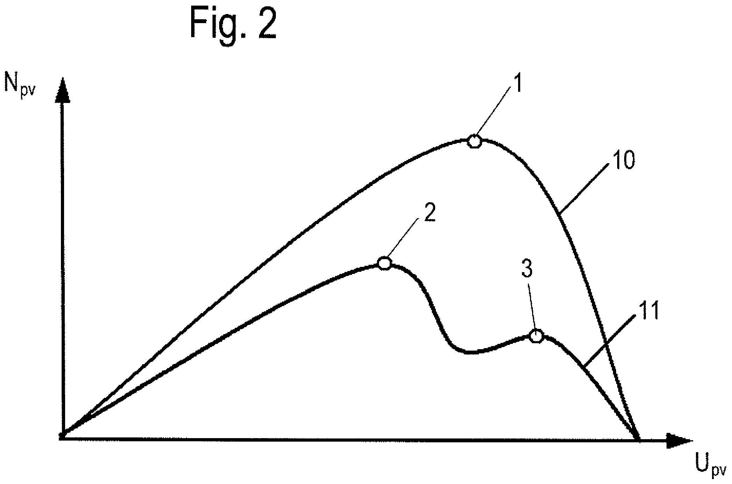

Fig. 2 zeigt eine schematische Darstellung von beispielhaften Leistungs-/Spannungskennlinien bzw. kurz "PU-Kennlinien" eines Photovoltaikgenerators PV. Eine Nennkennlinie 10 eines unverschatteten Photovoltaikgenerators PV weist ein Maximum auf. Dieses wird als Punkt maximaler Leistung 1 MPP (Maximum Power Point) bezeichnet.

Beispielsweise im Falle einer partiellen Verschattung des PV-Moduls oder des Photovoltaikgenerators kann mehr als ein lokales Maxima in der PU-Kennlinie entstehen, so dass sich z.B. eine Istkennlinie 11 mit einem globalen Punkt 2 maximaler Leistung MPP und einem lokalen Punkt 3 maximaler Leistung MPP ergibt.

Damit ein PV-Modul entsprechend seiner jeweiligen Istkennlinie 11 im Punkt maximaler Leistung MPP betrieben werden kann, gibt es das Betriebsführungs-Verfahren, das als einen Bestandteil ein so genanntes MPP-Tracking-Verfahren aufweisen oder als Unterroutine oder selbständige Verfahrensroutine aufweisen kann.

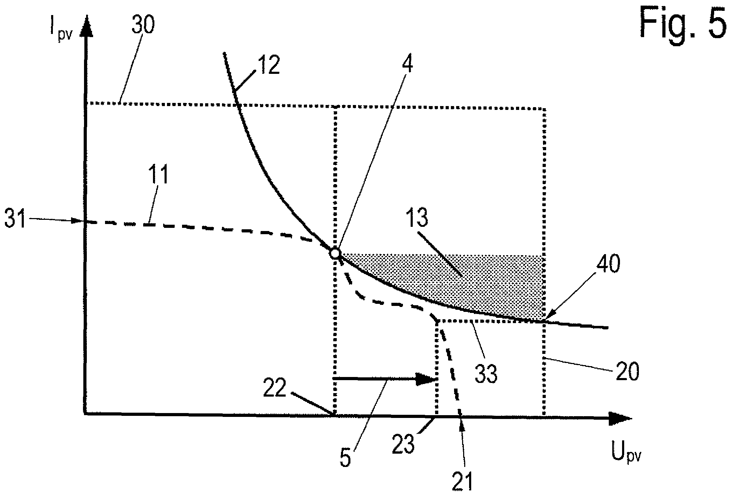

Unter dem Begriff "rechtsseitige" Suche ist nachfolgend eine Suche mit dem MPP-Tracking-Verfahren auf der PU-Kennlinie in einem Bereich rechts von einem Startpunkt aus zu höheren Spannungen Upv hin zu verstehen. Dabei wird entweder wiederholt schrittweise oder kontinuierlich die Suchspannung erhöht oder ein Suchstrom erniedrigt (siehe dazu auch Fig. 5).

Unter dem Begriff "linksseitige" Suche ist entsprechend eine Suche in einem Bereich links von einem Startpunkt aus zu niedrigeren Spannungen Upv hin zu verstehen. Dabei wird entweder wiederholt schrittweise oder kontinuierlich die Suchspannung erniedrigt oder ein Suchstrom erhöht.

Durch beispielsweise zyklisches oder ereignisgetriggertes Unterbrechen eines herkömmlichen MPP-Trackers und durch eine Suche nach einem höheren Punkt maximaler Leistung MPP, kann der MPP-Tracker den globalen Punkt maximaler Leistung MPP 2 ermitteln und anfahren bzw. einstellen.

An dieser Stelle sei darauf hingewiesen, dass die folgende Beschreibung des erfindungsgemäßen Verfahrens zur einfacheren Darstellung anhand einer Suche mit Spannungsvorgabe beschrieben ist. Eine entsprechende Umsetzung des erfinderischen Gedanken auf eine Suche mit Stromvorgabe soll vom erfinderischen Gedanken mit umfasst sein.

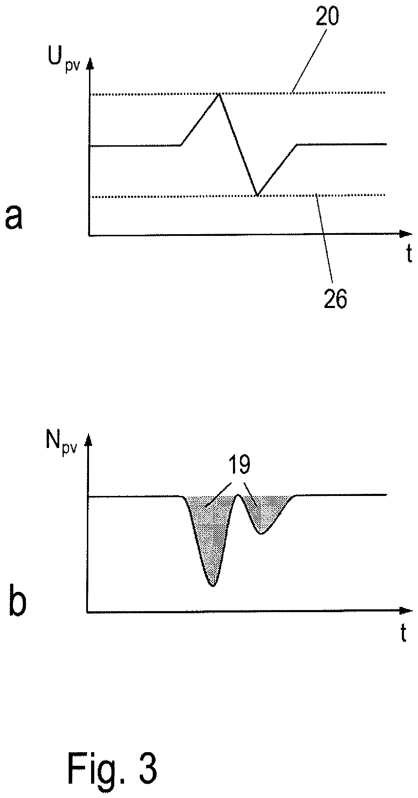

Dazu zeigt Fig. 3a eine grafische Darstellung einer Veränderung einer Spannung Upv über der Zeit t für eine Suche nach einem globalen Punkt maximaler Leistung MPP.

Eine solche Suche kann zum Beispiel durch ein Hoch- und Runterstellen bzw. -rampen der PV-Spannung Upv zwischen einer maximalen Suchspannung 20 und einer minimalen Grenz-Suchspannung 26 realisiert werden (Analog hierzu kann auch der PV-Strom Ipv variiert werden).

Wird dabei ein Punkt höherer Leistung gefunden, so kann dieser nach der Suche gezielt angefahren werden. Eine solche Suche führt zu einem zeitweisen Betrieb des Generators bei reduzierter Leistung, und somit zum Verlust einer erzielbaren Energieausbeute in Abhängigkeit von der Suchdauer, der Häufigkeit der Suche und dem Suchbereich. Diese verlorene Energieausbeute ist als Verlustleistung 19 in Fig. 3b in einer zu Fig. 3a korrespondierende Leistung Ppv über der Zeit illustriert.

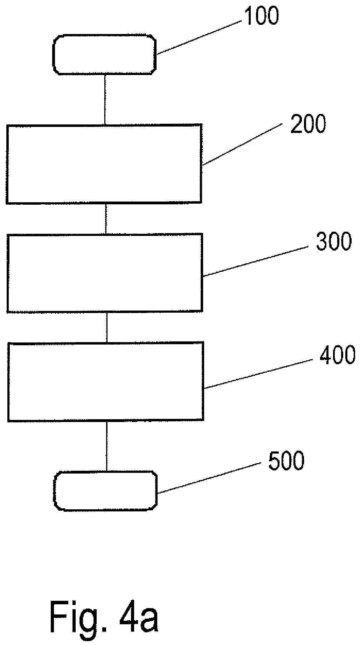

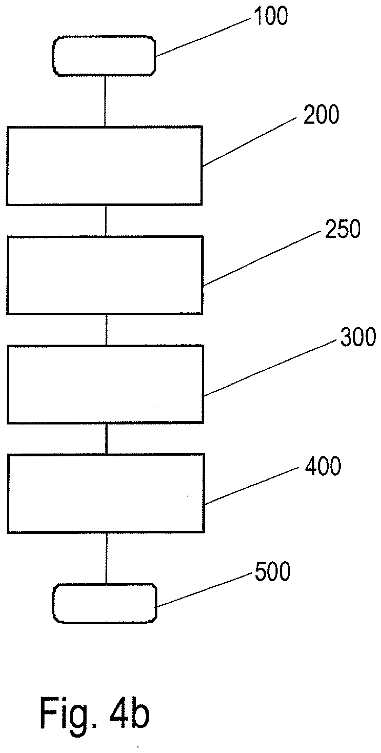

Mittels eines erfindungsgemäßen Verfahrens, das in den Fig. 4a und 4b als Ablaufdiagramm gezeigt und dann im Weiteren ausführlich beschrieben wird, wird die Verlustleistung 19 bei einer Suche nach einem Punkt höherer Leistung, beziehungsweise nach dem globalen Punkt maximaler Leistung MPP, durch intelligentes Einschränken des Suchbereichs minimiert.

Eine Einschränkung des Suchbereichs kann im Allgemeinen durch Erfüllung eines laufend kontrollierten Abbruchkriteriums, aber auch durch Erreichen eines vorbestimmten Wertes eines Parameters während des Ablaufs des Verfahrens realisiert werden.

In Fig. 4a ist ein Ablaufdiagramm eines ersten Ausführungsbeispiels eines erfindungsgemäßen Verfahrens zum Auffinden eines Punktes maximaler Leistung MPP gezeigt.

In einem ersten Verfahrensschritt 100 wird eine Suche begonnen, wobei verschiedene Randbedingungen festgelegt werden, insbesondere ein Startpunkt. Dieser Startpunkt kann ein Wert sein, der bei einer letzten Suche ermittelt worden ist. Er kann aber auch irgendwo beliebig auf der PU-Kennlinie 10,11 der Fig. 2 liegen, ferner kann er auch berechnet werden.

In einem zweiten Verfahrensschritt 200 werden Initialisierungen vorgenommen, wie zum Beispiel das Einstellen der Startspannung oder des Startstrom zur Suche am DC-/DC-Wandler.

Mit 300 ist ein dritter Verfahrensschritt bezeichnet, in welchem eine Suche als Programmschleife durchgeführt wird. Hier wird auch wenigstens eine Suchbereichseinschränkung als Abbruchbedingungen für die Programmschleife geprüft oder erzeugt und geprüft.

Im Verfahrensschritt 400 wird ein gefundener Punkt maximaler Leistung MPP angefahren und/oder gespeichert für weitere Anwendungen.

Schließlich wird das Verfahren im Verfahrensschritt 500 beendet.

Figur 4b gibt ein Ablaufdiagramm eines zweiten Ausführungsbeispiels des erfindungsgemäßen Verfahrens zum Auffinden eines Punktes maximaler Leistung MPP an.

Im Unterschied zum ersten Ausführungsbeispiel erfolgen hier in einem zusätzlichen Verfahrensschritt 250 das Festlegen von Suchbereichseinschränkungen vor einer Suche und/oder das Ermitteln einer bevorzugten Suchrichtung.

Es werden nun verschiedene vorteilhafte Suchbereichseinschränkungen erläutert, deren Berücksichtigung einzeln oder auch teilweise in Kombination die Suche nach einem MPP-Punkt vereinfachen und verkürzen kann.

Das Prinzip bei der Suchbereichseinschränkung aufgrund eines möglichen Bereichs höherer Leistung ist folgendes:

Bei der Suche nach einem Punkt höherer Leistung wird durch die Verwendung von wenigstens einem oder mehreren definierten Kriterien als Abbruchbedingung in jedem Schritt geprüft, ob bei Beibehaltung der Suchrichtung eine Aussicht auf eine Leistungszunahme besteht. Ist dies nicht der Fall, so wird die Suche abgebrochen.

Es werden zunächst die Abbruchbedingungen jeweils für eine rechtsseitige Suche 5 und eine linksseitige Suche 6 beschrieben.

Die Herleitung der Abbruchbedingung bei der rechtsseitigen Suche 5 wird anhand der Fig. 5 dargestellt.

Die Kurve mit dem Bezugszeichen 12 ist hier die bisher gefundene Maximalleistung.

Alle Wertepaare aus PV-Spannung Upv und PV-Strom Ipv auf dieser Kurve 12 ergeben miteinander multipliziert die gleiche Leistung.

Die Kurve 12 wird beim Auffinden einer höheren Leistung während der Suche aktualisiert.

Eine maximale Suchspannung 20 und ein maximaler Suchstrom 30 begrenzen ein Suchgebiet und sind abhängig von dem photovoltaischen Generator PV, den technischen Daten eines dem photovoltaischen Generator PV nachgeschalteten Wechselrichters (nicht gezeigt) sowie gegebenenfalls von dessen Betriebszustand.

Ein hier dargestellte Startpunkt 4 kann sowohl ein globaler oder lokaler Punkt maximaler Leistung MPP sein, als auch ein beliebiger Punkt auf der IU-Kennlinie des photovoltaischen Generators PV, die hier als gestrichelte Istkennlinie 11 eingezeichnet ist.

Der Schnittpunkt der Istkennlinie 11 mit Upv gibt die Leerlaufspannung 21 des photovoltaischen Generators PV an, und der Schnittpunkt der Istkennlinie 11 mit der Achse Ipv ist der Kurzschlussstrom 31.

Bei der rechtsseitigen Suche 5 kann ausgehend von einer Startspannung 22 im Startpunkt 4 ein Punkt höherer Leistung nur rechtsseitig dieser Spannung liegen.

Des Weiteren kann ein Punkt höherer Leistung nur oberhalb der Kurve mit der bisher gefundenen Maximalleistung 12 liegen.

Physikalisch bedingt kann bei einem PV-Modul oder bei einem Photovoltaikgenerator der Strom bei Anheben der PV-Spannung nicht ansteigen, er kann maximal konstant bleiben.

Aufgrund dessen kann ein Punkt höherer Leistung nur auf dem aktuellen oder unterhalb des aktuellen PV-Stroms Ipv liegen.

Es ergibt sich damit ausgehend von der Startspannung 22, der gepunktet dargestellte Leistungsbereich 13 als ein möglicher Bereich für einen Punkt höherer Leistung.

Unterschreitet der PV-Strom Ipv während der rechtsseitigen Suche 5 den Strom im Schnittpunkt (rechtsseitiger Suchendpunkt 40) von der maximalen Suchspannung 20 und der Linie mit der bisher gefunden Maximalleistung 12, so kann die Suche bei einem rechtsseitigen Abbruchstrom 33 und der zugehörigen rechtsseitigen Abbruchspannung 23 abgebrochen werden, da der mögliche Bereich höherer Leistung unerreichbar geworden ist.

Um dies zu verdeutlichen, ist die gestrichelte (unbekannte) IU-Kennlinie (Istkennlinie 11) eines verschatteten PV-Moduls oder Photovoltaikgenerators eingezeichnet. In diesem Beispiel wurde der Suchbereich für die rechtsseitige Suche 5 auf etwa die Hälfte des Spannungsbereichs von der Startspannung 22 bis zu der Suchspannung 20 reduziert.

Die entsprechende Abbruchbedingung ergibt sich bei Strom- oder Spannungsvorgabe zu:

$$Ipv \quad < \quad Pmax \, / \, Usuch \qquad\qquad (G01)$$

mit

Ipv := aktueller PV-Strom,

Pmax := während der Suche gefundene maximale Leistung, und

Usuch := maximale Suchspannung (oder maximale Tracking-Spannung oder maximale Wechselrichter PV-Spannung).

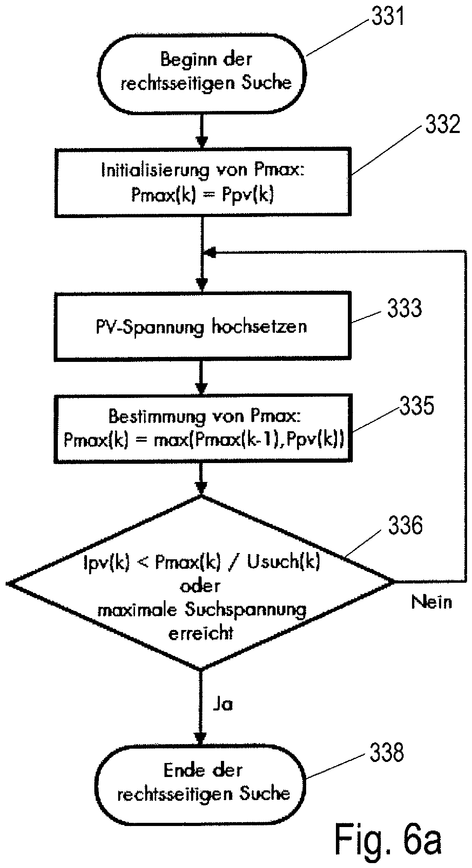

Ein entsprechendes Ablaufdiagramm ist in Fig. 6a für eine rechtsseitige Suche 5 bei einer Spannungsvorgabe gezeigt. Bei einem Auffinden einer höheren Leistung wird vorzugsweise der aktuelle Arbeitspunkt eingestellt und gespeichert.

Hierbei gilt:

k := laufender Index,
Ipv := aktueller PV-Strom,
Ppv := aktuelle PV-Leistung,
Pmax := während der Suche gefundene maximale Leistung und
Usuch := maximale Suchspannung (oder maximale Tracking-Spannung oder maximale Wechselrichter PV-Spannung).

Schritt 331 bezeichnet den Start einer rechtsseitigen Suche.

Schritt 332 bezeichnet eine Initialisierung der maximalen Leistung Pmax mit Pmax(k) = Ppv(k) am Startpunkt Ppv(0).

Sodann wird eine Programmschleife gestartet.

Im Schritt 333 wird sodann die Spannung Upv in einem Schritt, z.B. als ein Schritt auf einer ansteigenden Rampe, erhöht (bis maximal zur Suchspannung 20).

Im Schritt 335 wird durch einen Vergleich überprüft, ob an dem durch Spannungserhöhung angefahrenen aktuellen Punkt Pmax(k) mit dem aktuell ermittelten Leistungswert Ppv(k)) ein Punkt höherer Leistung erreicht worden ist als am vorher angefahrenen Punkt Pmax(k-1):

$$Pmax(k) = max(Pmax(k-1), Ppv(k)).$$

Sodann wird in einem Vergleichschritt 336 geprüft, ob eine Abbruchbedingung

$$Ipv(k) < Pmax(k) / Usuch(k)$$

erfüllt ist oder die maximale Suchspannung 20 erreicht wurde.

Ist dies nicht der Fall, wird zum Schritt 333 zurückgesprungen und die Spannung weiter erhöht und es wird weiter ein besserer Punkt maximaler Leistung MPP gesucht.

Nicht dargestellt ist, dass beim Auffinden einer höheren Leistung der aktuelle Arbeitspunkt gespeichert wird.

Ist ein Punkt maximaler Leistung MPP mit einer höheren Leistung gefunden, so wird dieser als aktueller Arbeitspunkt gespeichert und kann in einem weiteren Schritt angefahren werden. Wurde die maximale Suchspannung 20 erreicht oder ist die Abbruchbedingung erfüllt, ohne einen höheren MPP zu finden, so wird der bisherige oder zuletzt gefundene MPP beibehalten.

Die Suche wird bei 338 beendet.

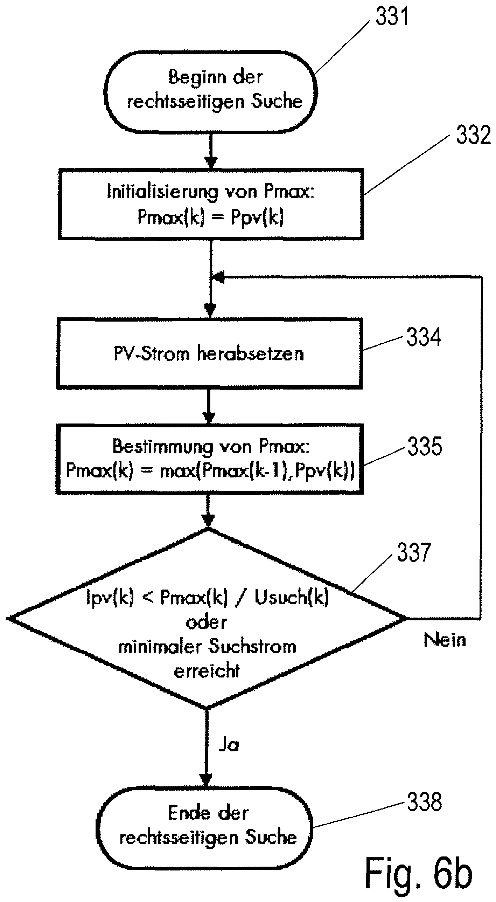

Anstelle einer Spannungsvorgabe kann auch eine Stromvorgabe zur rechtsseitigen Suche 5 erfolgen. Dies ist in Fig. 6b in einem beispielhaften Ablaufdiagramm für rechtsseitige Suche 5 mit Stromvorgabe gezeigt.

Hierbei gilt ebenfalls

k als laufender Index,

Ipv : = aktueller PV-Strom,
Ppv : = aktuelle PV-Leistung,
Pmax := während der Suche gefundene maximale Leistung und
Usuch := maximale Suchspannung (oder maximale Tracking-Spannung oder maximale Wechselrichter PV-Spannung).

Im Schritt 331 beginnt die rechtsseitige Suche.

Mit einem Schritt 332 ist die Initialisierung von Pmax mit Pmax(k) = Ppv(k) angegeben.

Sodann wird eine ggf. mehrfach zu durchlaufende Suchprogrammschleife gestartet Dabei wird zunächst in Schritt 334 der Strom Ipv in einem Schritt erniedrigt.

Sodann wird im Schritt 335 wird wieder die Leistung Pmax bestimmt: Pmax(k) = max(Pmax(k-1), Ppv(k)).

Im Vergleichschritt 336 wird geprüft, ob die Abbruchbedingung

$$Ipv(k) < Pmax(k) / Usuch(k)$$

erfüllt ist oder der minimale Suchstrom erreicht wurde.

Ist ein MPP mit einer höheren Leistung gefunden, so wird dieser als aktueller Arbeitspunkt gespeichert und kann in einem weiteren Schritt angefahren werden. Wurde der minimale Suchstrom erreicht oder ist die Abbruchbedingung erfüllt, ohne einen höheren MPP zu finden, so wird der bisherige oder zuletzt gefundene MPP beibehalten.

Die Suche wird bei 338 beendet.

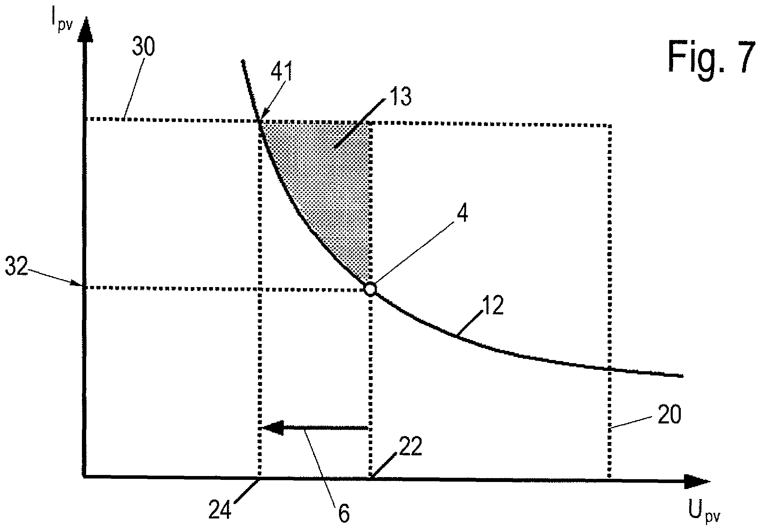

Fig. 7 gibt eine beispielhafte grafische Darstellung zur Erläuterung der Herleitung der Abbruchbedingung bei der linksseitigen Suche 6 an. Die Kurve mit dem Bezugszeichen 12 ist wieder die bisher gefundene Maximalleistung. Alle Wertepaare aus PV-Spannung Upv und PV-Strom Ipv auf dieser Kurve ergeben miteinander multipliziert die gleiche Leistung. Auch hier wird die Maximalleistung 12 beim Auffinden einer höheren Leistung während der Suche aktualisiert. Eine maximale Suchspannung 20 und ein maximaler Suchstrom 30 begrenzen das Suchgebiet und sind abhängig von den technischen Daten eines dem photovoltaischen Generator PV nachgeschalteten Wechselrichters (nicht gezeigt) sowie gegebenenfalls von dessen Betriebszustand. Der hier dargestellte Startpunkt 4 kann sowohl ein globaler oder lokaler Punkt maximaler Leistung MPP sein, als auch ein beliebiger Punkt auf der IU-Kennlinie des photovoltaischen Generators PV.

Bei der linksseitigen Suche 6 kann ausgehend von der Startspannung 22 im Startpunkt 4 ein Punkt höherer Leistung nur linksseitig dieser Startspannung 22 liegen.

Des Weiteren kann ein Punkt höherer Leistung nur oberhalb der bisher gefundenen Maximalleistung 12 liegen. Der maximale Suchstrom 30 schränkt den möglichen Bereich höherer Leistung weiter ein. Es ergibt sich, ausgehend von der Startspannung 22 im Startpunkt 4, der gepunktet dargestellte mögliche Leistungsbereich 13 für einen Punkt höherer Leistung. Unterschreitet Upv während der linksseitigen Suche die Spannung im Schnittpunkt von dem maximalen Suchstrom 30 und der Linie mit der bisher gefunden Maximalleistung 12 in einem linksseitigen Suchendpunkt 41, so kann die Suche bei einer linksseitigen Abbruchspannung 24 abgebrochen werden.

Die entsprechende Abbruchbedingung ergibt sich bei Strom- oder Spannungsvorgabe zu:

$$Upv < Pmax / Isuch$$

$$(G02)$$

Mit:

Upv := aktuelle PV-Spannung,
Pmax := während der Suche gefundene maximale Leistung und
Isuch : = maximaler Suchstrom (oder maximaler Wechselrichter PV-Strom).

An dieser Stelle kann zusätzlich eine untere Grenze für die Suchspannung definiert werden.

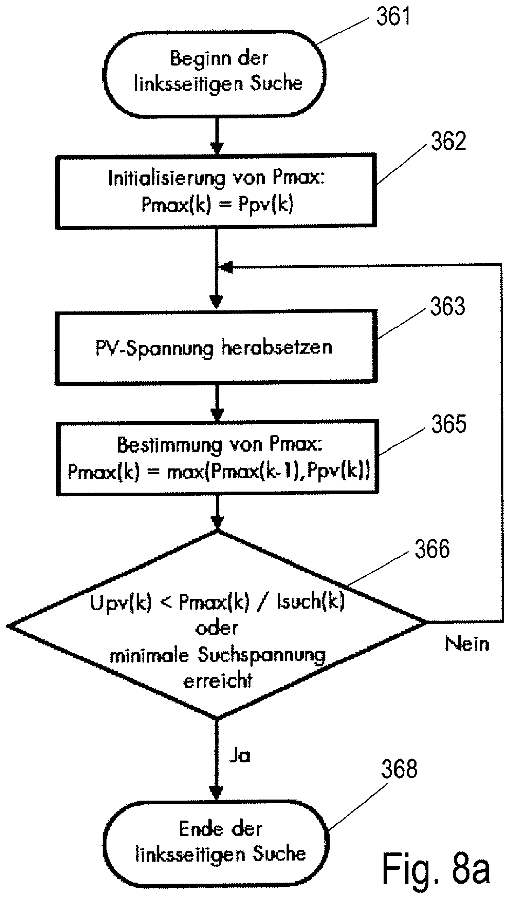

Figur 8a zeigt hierzu ein beispielhaftes Ablaufdiagramm für linksseitige Suche mit Spannungsvorgabe. Nicht dargestellt ist hier, dass bei Auffinden einer höheren Leistung der aktuelle Arbeitspunkt gespeichert wird.

Hierbei gilt:

k        ist laufender Index,
Upv     := aktuelle PV-Spannung,
Ppv     := aktuelle Leistung,
Pmax    := während der Suche gefundene maximale Leistung und
Isuch   := maximaler Suchstrom (oder maximaler Wechselrichter PV-Strom).

Im Schritt 361 beginnt eine linksseitige Suche. 362 gibt eine Initialisierung von Pmax mit Pmax(k) = Ppv(k) an.

Dann wird bei 363 in einer ggf. mehrfach zu durchlaufenden Schleife die Spannung Upv in k Schritten, z.B. in einer Rampe, bis zu einer minimalen Suchspannung erniedrigt.

Beim Durchlaufen der Schleife wird sodann jeweils Pmax im Schritt 365 bestimmt: Pmax(k) = max(Pmax(k-1), Ppv(k)).

Im Vergleichschritt 366 wird eine Abbruchbedingung

$$Upv(k) < Pmax(k) / Isuch(k)$$

geprüft.

Es wird auch geprüft, ob die minimale Suchspannung erreicht wurde. Ist dies nicht der Fall, wird zum Schritt 363 zurückgesprungen und die Spannung weiter erniedrigt.

Ist ein MPP mit einer höheren Leistung gefunden, so wird dieser als aktueller Arbeitspunkt gespeichert und kann in einem weiteren Schritt angefahren werden. Wurde die minimale Suchspannung erreicht oder ist die Abbruchbedingung erfüllt, ohne einen höheren MPP zu finden, so wird der bisherige oder zuletzt gefundene MPP beibehalten.

Die Suche wird bei 368 beendet.

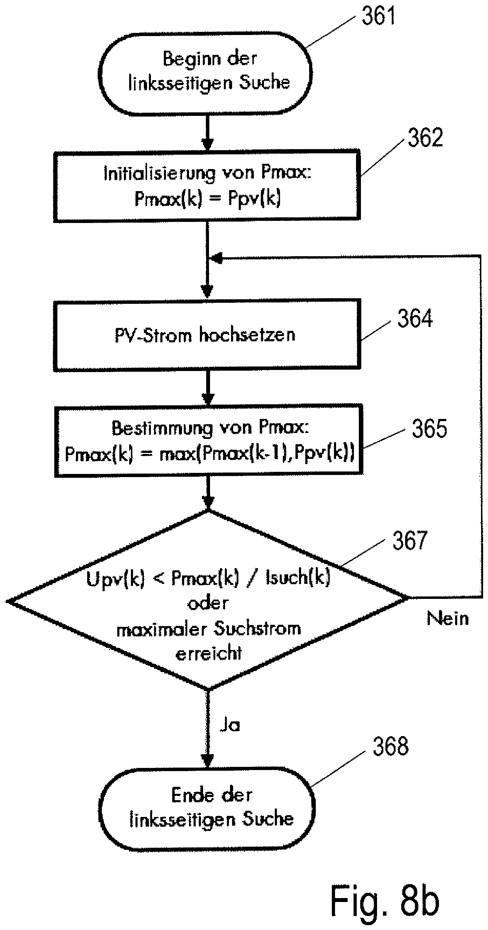

Anstelle einer Spannungsvorgabe kann auch eine Stromvorgabe zur linksseitigen Suche erfolgen. Dies ist in einem beispielhaften Ablaufdiagramm für linksseitige Suche mit Stromvorgabe in Fig. 8b gezeigt.

Auch hier gilt:

k als laufender Index,

Ipv := aktueller PV-Strom,

Ppv := aktuelle PV-Leistung,

Pmax := während der Suche gefundene maximale Leistung und

Usuch := maximale Suchspannung (oder maximale Tracking-Spannung oder maximale Wechselrichter PV-Spannung).

Die linksseitige Suche beginnt im Schritt 361. Mit 362 ist die Initialisierung von Pmax mit Pmax(k) = Ppv(k) angegeben.

Nun wird in einer Schleife 364 der Strom Ipv in k Schritten, z.B. in einer Rampe, bis zu einem maximalen Suchstrom 30 erhöht. Bei 365 wird in der Schleife jeweils wieder Pmax bestimmt: Pmax(k) = max(Pmax(k-1), Ppv(k)). Im Vergleichschritt 367 wird in der Schleife sodann geprüft, ob die Abbruchbedingung

$$Upv(k) < Pmax(k) / Isuch(k)$$

der Schleife erfüllt ist oder der maximale Suchstrom 30 erreicht wurde.

Ist ein Punkt maximaler Leistung MPP mit einer höheren Leistung gefunden, so wird dieser als aktueller Arbeitspunkt gespeichert und kann in einem weiteren Schritt angefahren werden. Wurde der maximale Suchstrom 30 erreicht oder ist die Abbruchbedingung erfüllt, ohne einen höheren Punkt maximaler Leistung MPP zu finden, so wird der bisherige oder zuletzt gefundene Punkt maximaler Leistung MPP beibehalten.

In 368 wird die linksseitige Suche beendet.

Eine weitere Einschränkung eines Suchbereichs kann aufgrund der Nennleistung des angeschlossenen Strings erfolgen.

Aufgrund des Verlaufs einer IU-Kennlinie ist es physikalisch nicht möglich, dass bei maximaler Suchspannung 20 der maximale Suchstrom 30 fließt und umgekehrt. Ist die Nennleistung oder die Maximalleistung bei Volllast des an dem zu suchenden String angeschlossenen Photovoltaikgenerators bekannt, so kann die maximale Suchspannung 20 sowie der maximale Suchstrom 30 aufgrund dieser Kenntnis bereits im Vorfeld herabgesetzt werden. Diese aufgrund der Nennleistung ermittelten neuen Grenzwerte, hier die als Nenn-Suchspannung 25 bezeichnete maximale Suchspannung (wird weiter unten noch näher erläutert) und der entsprechend ermittelte, hier als Nenn-Suchstrom 35 bezeichnete, maximale Suchstrom, können dann bei den oben beschriebenen ermittelten Abbruchbedingungen eingesetzt werden. Diese Maßnahme schränkt den Suchbereich, vor allem bei Betrieb des betreffenden Strings nahe der maximalen Leistung, weiter ein. Die Information über die Nennleistung kann zum Beispiel vom Anlagenbetreiber oder vom Installateur direkt vorgegeben werden oder aus den Betriebsdaten der betreffenden Strings ermittelt werden. Bei Wechselrichtern, bei denen die maximal erlaubte Stringleistung geringer als die maximale (Nenn-) Suchspannung multipliziert mit dem maximalen (Nenn-) Suchstrom ist, kann alternativ auch die maximal erlaubte Stringleistung anstelle der an den betreffenden String angeschlossenen Nennleistung eingesetzt werden.

Zunächst wird die rechtsseitige Suche 5 erläutert.

Geht man zunächst von einem unverschatteten PV-Modul oder Photovoltaikgenerator im Nennbetrieb aus, so berechnet sich die maximale Spannung bis zu der in diesem Fall gesucht werden muss wie folgt:

$$Usuch = Pnenn/Impp$$

$$(G03)$$

mit:

Usuch := maximale Suchspannung,
Pnenn := Nennleistung des an dem zu suchenden String angeschlossenen Photovoltaikgenerators und
Impp := PV-Strom im Punkt maximaler Leistung.

Dieser Ansatz ist allerdings nur im Nennbetrieb und bei unverschattetem Photovoltaikgenerator gültig.

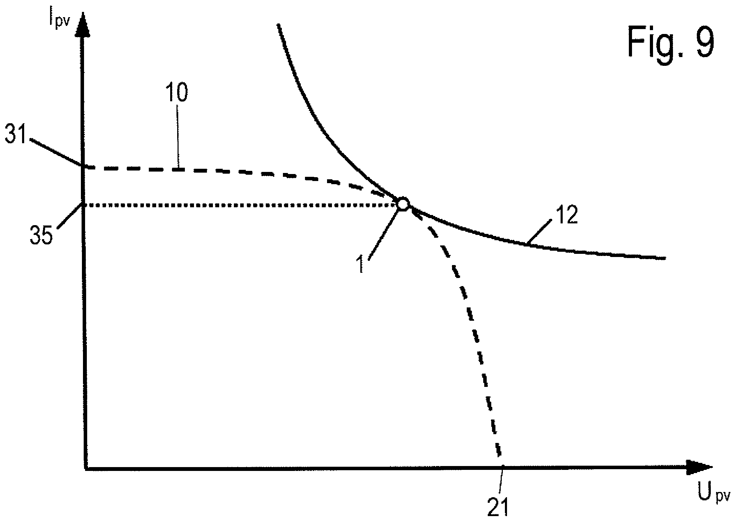

Fig. 9 zeigt eine grafische Darstellung zur Veranschaulichung eines Punktes maximaler Leistung MPP 1 bei unverschatteter IU-Kennlinie, die hier auch als Nennkennlinie 10 bezeichnet ist. Mit dem Bezugszeichen 12 ist die Kurve konstanter Leistung angegeben, auf welcher der Punkt maximaler Leistung 1 liegt.
Um eine allgemeingültige Formel zu erhalten, muss der Strom Impp durch den Strom vor der Suche ersetzt werden. Dieser kann maximal der Kurzschlussstrom 31 des angeschlossenen Photovoltaikgenerators sein. Der zugehörige Strom im Punkt maximaler Leistung (Punkt maximaler Leistung MPP) 1 wäre in diesem Fall zum Beispiel bei Siliziumzellen typischerweise etwa 90% des Kurzschlussstroms 31 und ist in der Fig. 9 als Nenn-Suchstrom mit dem Bezugszeichen 35 angegeben. Um eine allgemeingültige Formel zu erhalten, welche für einen beliebigen Startpunkt der Suche gültig ist, muss dieser Fall angesetzt werden. Für das Beispiel von Siliziumzellen folgt:

$$U'such = Pnenn / (Istart * 0.9) \qquad\qquad (G04)$$

mit:

U'such := maximale Suchspannung bezogen auf die Nennleistung,
Pnenn := Nennleistung des an dem zu suchenden String angeschlossenen Photovoltaikgenerators und
Istart := PV-Strom Ipv vor der Suche.

Zellentypunabhängig folgt:

$$U'such := Pnenn / (Istart * ki)$$

$$(G05)$$

Mit:

U'such := maximale Suchspannung bezogen auf die Nennleistung,
Pnenn := Nennleistung des an dem zu suchenden String angeschlossenen Photovoltaikgenerators,
ki := etwa Faktor MPP-Strom/Kurzschlussstrom bei entsprechendem Zelltyp und Istart := PV-Strom Ipv vor der Suche.

Diese Formel ist allgemeingültig. Bei beispielsweise schwächerer Bestrahlung oder bei einem verschattetem PV-Modul oder Photovoltaikgenerator sinkt entsprechend der Kurzschlussstrom 31, beziehungsweise der Strom vor Beginn der Suche. Die maximale Suchspannung wird dann entsprechend aufgeweitet und ein entstehender MPP rechtsseitig des Punkts maximaler Leistung Punkt maximaler Leistung MPP 1 im Nennbetrieb kann ebenfalls gefunden werden.
Um ein Aufweiten der maximalen Suchspannung bezogen auf die Nennleistung U'such größer als die maximale Suchspannung Usuch zu vermeiden, sollte in die Abbruchbedingung (G01) das Minimum aus U'such und Usuch eingesetzt werden.
Es folgt somit für die erweiterte Abbruchbedingung:

$$Ipv < Pmax / min(U'such, Usuch)$$

$$(G06)$$

$$Ipv < Pmax / min(Pnenn / (Istart * ki), Usuch)$$

$$(G07)$$

Mit:

Ipv := aktueller PV-Strom,
Pmax := während der Suche gefundene maximale Leistung,
Usuch := maximale Suchspannung (oder maximale Tracking-Spannung oder maximale Wechselrichter PV-Spannung),
U'such := maximale Suchspannung bezogen auf die Nennleistung,
Pnenn := Nennleistung des an dem zu suchenden String angeschlossenen Photovoltaikgenerators,
ki := etwa Faktor MPP-Strom/Kurzschlussstrom bei entsprechendem Zelltyp und Istart := PV-Strom vor der Suche

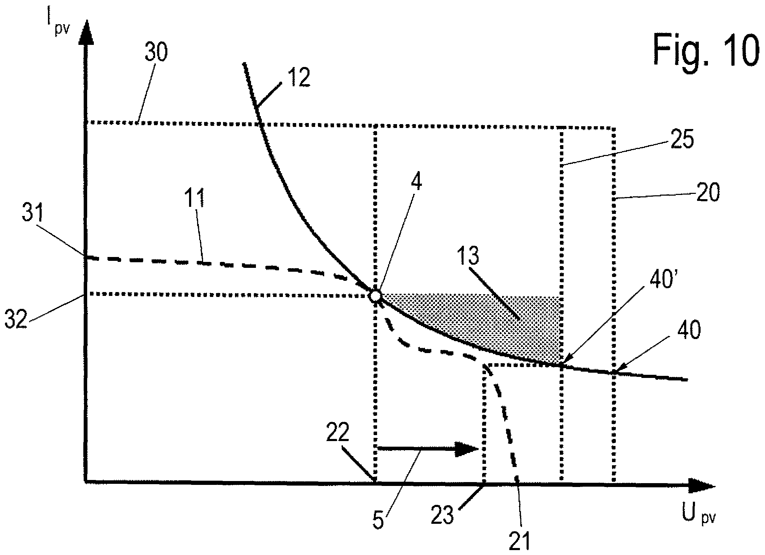

Die Suchbereichseinschränkung aufgrund der Nennleistung des angeschlossenen PV-Moduls oder Photovoltaikgenerators ist in Fig. 10 grafisch dargestellt. Aufgrund der aus der angeschlossenen Nennleistung des Photovoltaikgenerators berechneten maximalen Suchspannung, die als Nenn-Suchspannung 25 bezeichnet ist, wird in dem dargestellten Fall der mögliche Bereich höherer Leistung weiter eingeschränkt. Dies ist dadurch erkennbar, dass die Nenn-Suchspannung 25 die Maximalleistung 12 in einem rechtsseitigen Suchendpunkt 40' schneidet, welcher links vor dem bisherigen rechtsseitigen Suchendpunkt 40 liegt. Aufgrund des Verlaufs der Maximalleistung 12 ist dann der Strom, bei dem die Suche beendet wird, höher. Der Suchbereich wurde daher ebenfalls weiter eingeschränkt. Ein Startstrom ist mit 32 bezeichnet, das Bezugszeichen 23 gibt die nun weiter links liegende rechtsseitige Abbruchspannung an.

In einer optionalen Variante kann die bei der Herleitung aller der hier genannten Abbruchbedingung und Suchbereiseinschränkungen die formulierte Annahme, dass der Strom bei Fortsetzung der rechtsseitigen Suche bestenfalls konstant bleibt (oder sinkt), abgewandelt werden. Eine einfache Abwandlung besteht darin, dass anstelle eines konstanten Stroms ein Stromverlauf angenommen wird, bei dem der Strom mit steigender Spannung linear sinkt. Die gleiche Abwandlung kann genauso für die Spannung getroffen werden. Der Betrag der Steigung wird hierbei mit einem Faktor m_Ipv, für die Steigung des Stroms Ipv, bzw. m_Upv, für die Steigung der Spannung Upv, bezeichnet. Die vorgenannten Bedingungen G01 und G02 werden dann modifiziert zu:

$$Ipv < Pmax / Usuch + m\_Ipv * (Usuch - Upv) \qquad (G01')$$

$$Upv < Pmax / Isuch + 1/m\_Upv * (Isuch - Ipv) \qquad (G02').$$

In einer Verallgemeinerung des abwandelnden Gedankens wird die Annahme konstanten Stromes durch einen beliebigen Modellstromverlauf ersetzt. Der Modellstromverlauf Imodell(U) repräsentiert hierbei eine Stromvorhersage als Funktion der fortgesetzten Suchspannung, gibt also eine Prognose für einen Stromwert vor, auf den der Strom Ipv bei Erreichen einer (höheren) Spannung U mindestens abgefallen sein wird. Ein Verlauf Imodell(U) kann beispielsweise aus einer typischen Idealkennlinie eines photovoltaischen Generators PV ermittelt werde, oder auch durch einen Modellverlauf anhand von Parametern wie Serienwiderstand und Parallelwiderstand eines idealen PV-Generators bestimmt sein. In diesem verallgemeinerten Fall wird die rechtsseitige Suche 5 dann abgebrochen, wenn zwischen Upv und Usuch (bzw. Usuch') kein Spannungswert Uzwischen existiert, für den gilt:

$$Pmax < Uzwischen*Ipv*Imodell(Uzwischen)/Imodell(Upv) \qquad (G01'')$$

Analog kann für die linksseitige Suche das folgende abgewandelte Abbruchkriterium genutzt werden:

$$Upv < Pmax / Isuch * Imodell(U=0) / Imodell(Upv) \qquad (G02'')$$

Mit:

Ipv := aktueller PV-Strom,
Pmax := während der Suche gefundene maximale Leistung,

Usuch := maximale Suchspannung (oder maximale Tracking-Spannung oder maximale Wechselrichter PV-Spannung),

Imodell (U) := Modellstromverlauf als Funktion der Spannung U.

m_Ipv := linearer Faktor, mit dem der angenommene Strom mit steigender Spannung sinkt

m_Upv := linearer Faktor, mit dem die angenommene Spannung mit steigendem Strom fällt

Weiterhin kann der Fall auftreten, dass bei der Suche ein Teil der Generatorkennlinie erreicht wird, bei dem zwar noch die theoretische Erreichbarkeit eines höheren Wertes der Generatorleistung gegeben ist, die genannten Abbruchkriterien also noch nicht erfüllt sind. Sofern ein möglicher Arbeitspunkt aber nur geringfügig über der bereits erreichten Leistung liegt, der Arbeitspunkt in der Nähe des Randes des Suchbereiches liegt, oder die Wahrscheinlichkeit zur Existenz des Arbeitspunktes nur gering ist, wäre es wünschenswert, die Suche in einer solchen Situation dennoch nicht weiter fortzusetzen. Eine Möglichkeit zur Realisierung dieses Wunsches ist es, in den beschriebenen Abbruchkriterien anstelle einer bereits erreichten Leistung Pmax einen zum Beispiel um einen Betrag oder einen Faktor erhöhten Leistungswert Pmax' zu verwenden. In diesem Fall wird die linksseitige oder rechtsseitige Suche entsprechend früher abgebrochen, nämlich dann, wenn es unmöglich wird, den erhöhten Leistungswert bei Fortsetzung der Suche noch zu realisieren.

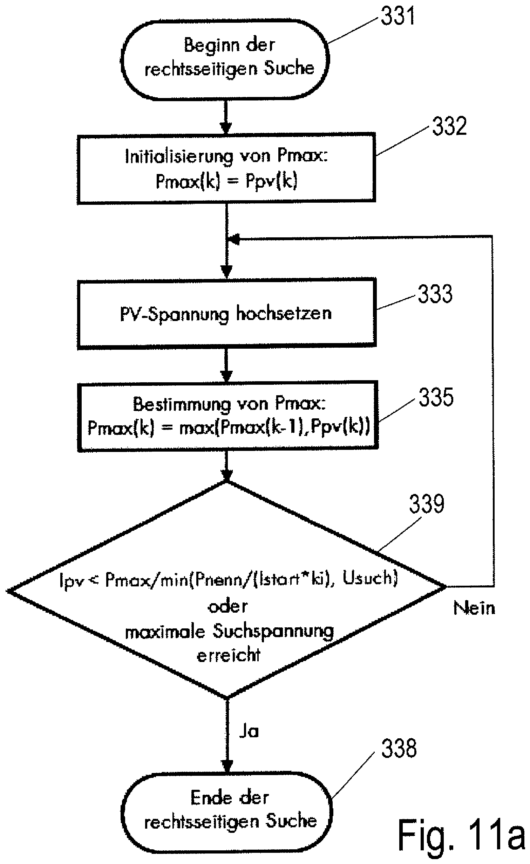

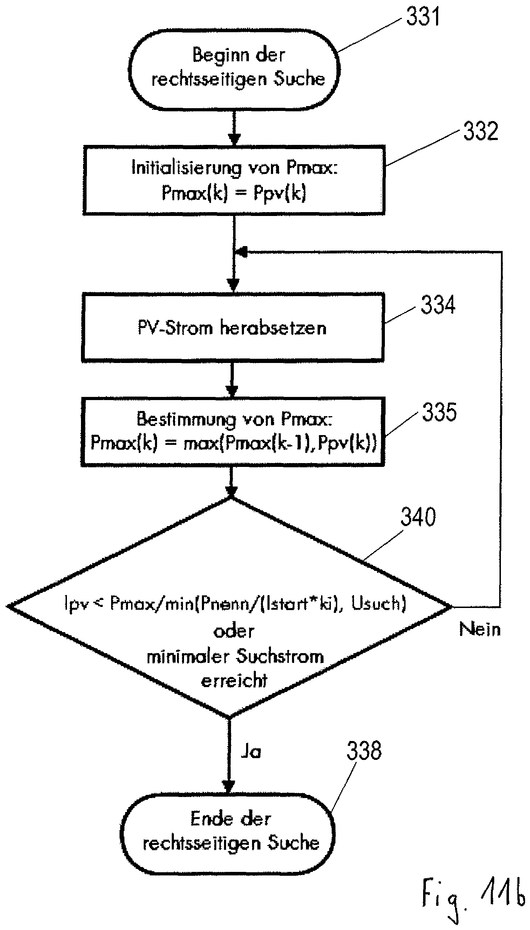

In Fig. 11 a ist das Ablaufdiagramm bei Spannungsvorgabe (nicht dargestellt: bei Auffinden einer höheren Leistung wird der aktuelle Arbeitspunkt gespeichert) für eine rechtsseitige Suche 5 gezeigt.

In diesem Ablaufdiagramm gilt:

Ipv = aktueller PV-Strom,

Ppv = aktuelle PV-Leistung,

Pmax = während der Suche gefundene maximale Leistung,

Usuch = maximale Suchspannung (oder maximale Tracking-Spannung oder maximale Wechselrichter PV-Spannung),

Pnenn = Nennleistung des an dem zu suchenden String angeschlossenen Photovoltaikgenerators,

ki = etwa Faktor MPP-Strom/Kurzschlussstrom bei entsprechendem Zelltyp und Istart = PV-Strom vor der Suche

Mit Schritt 331 beginnt die rechtsseitige Suche. Bei 332 ist eine Initialisierung von Pmax mit Pmax(k) = Ppv(k) angegeben. Dann wird in einer Schleife bei 333 die Spannung Upv in k Schritten, z.B. in einer Rampe, bis maximal zur Suchspannung 20 erhöht.

Bei 335 wird jeweils Pmax bestimmt: Pmax(k) = max(Pmax(k-1), Ppv(k)).

Im Vergleichschritt 336 wird geprüft, ob die Abbruchbedingung

$$Ipv < Pmax / \min(Pnenn / (Istart * ki), Usuch)$$

erfüllt ist oder die maximale Suchspannung 20 erreicht wurde. Ist dies nicht der Fall, wird zum Schritt 333 zurückgesprungen und die Spannung weiter erhöht. Ist ein MPP mit einer höheren Leistung gefunden, so wird dieser als aktueller Arbeitspunkt gespeichert und kann in einem nachfolgenden Schritt angefahren werden. Wurde die maximale Suchspannung 20 erreicht oder ist die Abbruchbedingung erfüllt, ohne einen höheren MPP zu finden, so wird der bisherige oder zuletzt gefundene MPP angefahren.

Die Suche wird bei 338 beendet.

Das entsprechende Ablaufdiagramm ergibt sich bei Stromvorgabe (nicht dargestellt ist, dass bei Auffinden einer höheren Leistung wird der aktuelle Arbeitspunkt gespeichert), wie in Fig. 11b für rechtsseitige Suche 5 mit Stromvorgabe illustriert ist.

Hierbei gilt:

Ipv := aktueller PV-Strom,

Ppv := aktuelle PV-Leistung,

Pmax := während der Suche gefundene maximale Leistung,

Usuch := maximale Suchspannung (oder maximale Tracking-Spannung oder maximale Wechselrichter PV-Spannung),

Pnenn := Nennleistung des an dem zu suchenden String angeschlossenen Photovoltaikgenerators,

ki := etwa Faktor MPP-Strom/Kurzschlussstrom bei entsprechendem Zelltyp und Istart := PV-Strom vor der Suche

Schritt 331 gibt den Beginn der rechtsseitigen Suche an. Bei 332 erfolgt eine Initialisierung von Pmax mit Pmax(k) = Ppv(k) angegeben. Dann wird bei 334 der Strom Ipv in k Schritten, z.B. in einer Rampe, bis zu einem minimalen Suchstrom erniedrigt.

Bei 335 wird Pmax bestimmt: Pmax(k) = max(Pmax(k-1), Ppv(k)).

Im Vergleichschritt 340 wird geprüft, ob die Abbruchbedingung

$$Ipv < Pmax \, / \, min(Pnenn \, / \, (Istart * ki), Usuch)$$

erfüllt ist oder ein minimaler Suchstrom erreicht wurde. Ist dies nicht der Fall, wird zum Schritt 334 zurückgesprungen und die Spannung weiter erhöht.

Ist ein MPP mit einer höheren Leistung gefunden, so wird dieser als aktueller Arbeitspunkt gespeichert und kann in einem weiteren Schritt angefahren werden. Wurde der minimale Suchstrom erreicht oder ist die Abbruchbedingung erfüllt, ohne einen höheren MPP zu finden, so wird der bisherige oder zuletzt gefundene MPP beibehalten.

Die Suche wird bei 338 beendet.

Es folgt die Beschreibung der linksseitigen Suche 6.

Geht man zunächst wieder von einem unverschatteten PV-Modul oder Photovoltaikgenerator im Nennbetrieb aus, so berechnet sich der maximale Strom bis zu dem in diesem Fall gesucht werden muss wie folgt:

$$Isuch = Pnenn/Umpp$$

Mit:

Isuch := maximaler Suchstrom,
Pnenn := Nennleistung des an dem zu suchenden String angeschlossenen Photovoltaikgenerators und
Umpp := PV-Spannung im Punkt maximaler Leistung.

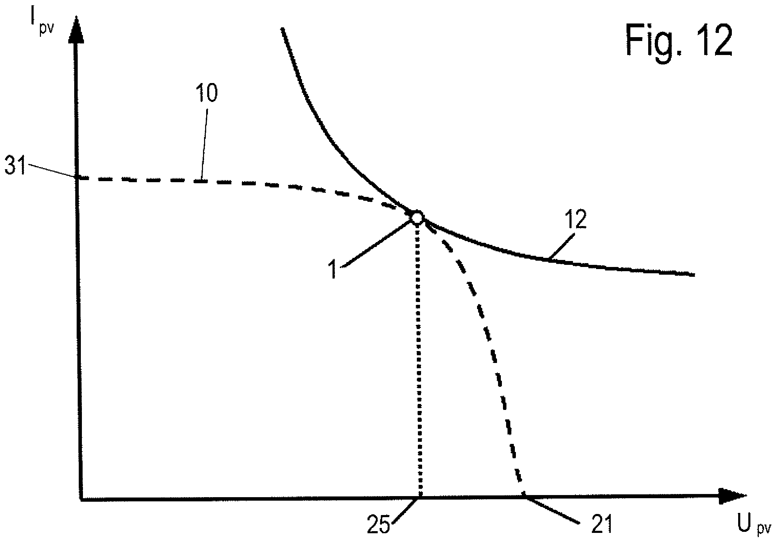

Dieser Ansatz ist allerdings nur im Nennbetrieb und bei unverschattetem Photovoltaikgenerator gültig. Fig. 12 zeigt eine grafische Darstellung zur Veranschaulichung eines Punktes maximaler Leistung MPP 1 bei unverschatteter IU-Kennlinie (Nennkennlinie 10). Mit dem Bezugszeichen 12 ist die Kurve der Maximalleistung angegeben, auf welcher Punkt maximaler Leistung MPP 1 liegt. Um eine allgemeingültige Formel zu erhalten, muss die Spannung Umpp durch die Spannung vor der Suche ersetzt werden. Diese kann maximal die Leerlaufspannung 21 des angeschlossenen Photovoltaikgenerators sein. Die zugehörige Spannung im Punkt maximaler Leistung wäre in diesem Fall zum Beispiel bei Siliziumzellen typischerweise etwa 80% der Leerlaufspannung und ist hier als Nenn-Suchspannung 25 angegeben. Um eine allgemeingültige Formel zu erhalten, welche für einen beliebigen Startpunkt der Suche gültig ist, kann dieser Fall angesetzt werden.

Für das Beispiel der Siliziumzellen folgt:

$$I'such = Pnenn \, / \, (Ustart * 0.8)$$

$$(G08)$$

Mit:

I'such := maximaler Suchstrom bezogen auf die Nennleistung,
Pnenn := Nennleistung des an dem zu suchenden String angeschlossenen Photovoltaikgenerators und
Ustart := PV-Spannung vor der Suche.

Zellentypunabhängig folgt:

$$I'such = Pnenn \, / \, (Ustart * ku)$$

$$(G09)$$

Mit:

I'such = maximaler Suchstrom bezogen auf die Nennleistung,

Pnenn := Nennleistung des an dem zu suchenden String angeschlossenen Photovoltaikgenerators,

ku := etwa Faktor MPP-Spannung/Leerlaufspannung bei entsprechendem Zelltyp und Ustart := PV-Spannung vor der Suche.

Diese Formel kann breit verwendet werden. Bei beispielsweise schwächerer Bestrahlung oder bei einem verschattetem PV-Modul oder Photovoltaikgenerator sinkt entsprechend der Kurzschlussstrom 31, beziehungsweise der Strom vor Beginn der Suche. Der hier berechnete Strom I'such, bezogen auf die angeschlossene Nennleistung, liegt dann über dem tatsächlichem Strom im Punkt maximaler Leistung.

Um ein Aufweiten des maximalen Suchstroms bezogen auf die Nennleistung I'such größer als der maximale Suchstrom Isuch zu vermeiden, sollte in die Abbruchbedingung (G02) das Minimum aus I'such und Isuch eingesetzt werden.

Es folgt die erweiterte Abbruchbedingung:

$$Upv < Pmax \,/\, min(I'such, Isuch)$$

$$(G10)$$

$$Upv < Pmax \,/\, min(Pnenn \,/\, (Ustart * ku), Isuch)$$

$$(G11)$$

Hierbei gilt:

Upv := aktuelle PV-Spannung,

Pmax := während der Suche gefundene maximale Leistung,

Isuch := maximaler Suchstrom (oder maximaler Wechselrichter PV-Strom),

I'such := maximaler Suchstrom bezogen auf die Nennleistung,

Pnenn := Nennleistung des an dem zu suchenden String angeschlossenen Photovoltaikgenerators,

ku := etwa Faktor MPP-Spannung/Leerlaufspannung bei entsprechendem Zelltyp und Ustart := PV-Spannung vor der Suche.

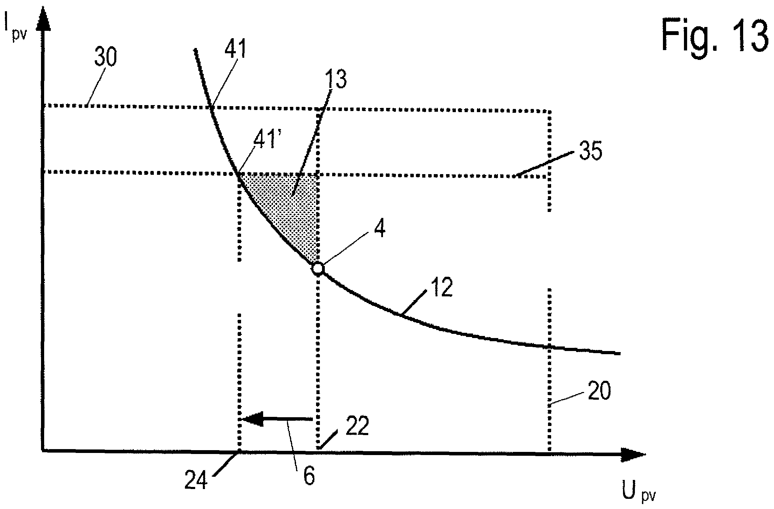

Die Suchbereichseinschränkung aufgrund der Nennleistung des angeschlossenen PV-Moduls oder Photovoltaikgenerators ist in Fig. 13 für die linksseitige Suche 6 grafisch dargestellt. Aufgrund des maximalen Suchstroms, berechnet aus der angeschlossenen Nennleistung des Photovoltaikgenerators, wird in dem dargestellten Fall der mögliche Bereich höherer Leistung weiter eingeschränkt. Der entsprechende Suchbereich wurde daher ebenfalls weiter eingeschränkt. Dies ist dadurch erkennbar, dass der Nenn-Suchstrom 35 die Maximalleistung 12 in einem linksseitigen Suchendpunkt 41' schneidet, welcher unter dem bisherigen linksseitigen Suchendpunkt 41 liegt. Die Startspannung im Startpunkt 4 ist mit 22 bezeichnet, das Bezugszeichen 24 gibt eine linksseitige Abbruchspannung an.

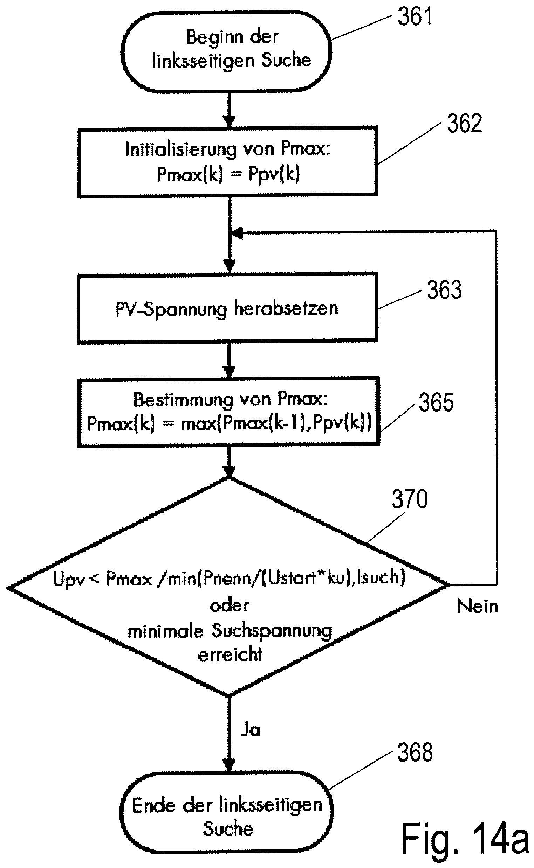

Das entsprechende Ablaufdiagramm ist bei Spannungsvorgabe (nicht dargestellt ist: bei Auffinden einer höheren Leistung wird der aktuelle Arbeitspunkt gespeichert) in Fig. 14a für linksseitige Suche 6 gezeigt.

Mit:

Upv := aktuelle PV-Spannung,

Ppv := aktuelle PV-Leistung,

Pmax := während der Suche gefundene maximale Leistung,

Isuch := maximaler Suchstrom (oder maximaler Wechselrichter PV-Strom),

Pnenn := Nennleistung des an dem zu suchenden String angeschlossenen Photovoltaikgenerators,

ku := etwa Faktor MPP-Spannung/Leerlaufspannung bei entsprechendem Zelltyp und Ustart := PV-Spannung vor der Suche.

Mit Schritt 361 beginnt die linksseitige Suche. Bei 362 ist eine Initialisierung von Pmax mit Pmax(k) = Ppv(k) angegeben. Mit Schritt 363 wird die Spannung Upv in k Schritten, z.B. in einer Rampe, bis zu einer minimalen Suchspannung herabgesetzt. Bei 365 wird Pmax bestimmt: Pmax(k) = max(Pmax(k-1), Ppv(k)).

Im Vergleichschritt 370 wird geprüft, ob die Abbruchbedingung

$$Upv < Pmax / min(Pnenn / (Ustart * ku), Isuch)$$

erfüllt ist oder die minimale Suchspannung erreicht wurde. Ist dies nicht der Fall, wird zum Schritt 363 zurückgesprungen und die Spannung weiter erniedrigt.

Ist ein MPP mit einer höheren Leistung gefunden, so wird dieser als aktueller Arbeitspunkt gespeichert und kann in einem weiteren Schritt angefahren bzw. eingestellt werden. Wurde die minimale Suchspannung erreicht oder ist die Abbruchbedingung erfüllt, ohne einen höheren MPP zu finden, so wird der bisherige oder zuletzt gefundene MPP beibehalten.

Die Suche wird bei 368 beendet.

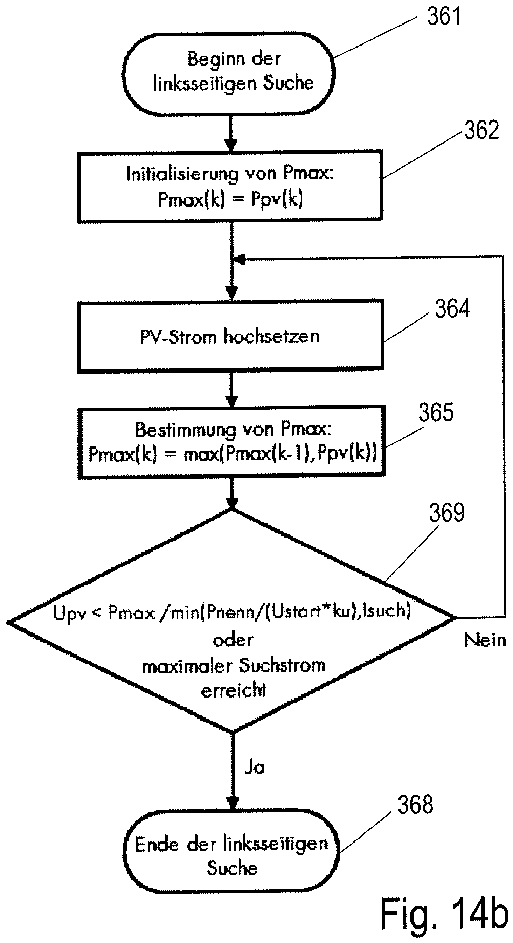

Das entsprechende Ablaufdiagramm ergibt sich bei Stromvorgabe zu (nicht dargestellt: bei Auffinden einer höheren Leistung wird der aktuelle Arbeitspunkt gespeichert), wie dies in Fig. 14b dargestellt ist.

Hierbei gilt:

Upv := aktuelle PV-Spannung,

Ppv := aktuelle PV-Leistung,

Pmax := während der Suche gefundene maximale Leistung,

Isuch := maximaler Suchstrom (oder maximaler Wechselrichter PV-Strom),

Pnenn := Nennleistung des an dem zu suchenden String angeschlossenen Photovoltaikgenerators,

ku := etwa Faktor MPP-Spannung/Leerlaufspannung bei entsprechendem Zelltyp und Ustart := PV-Spannung vor der Suche.

Im Schritt 361 beginnt die linksseitige Suche. Bei 362 erfolgt eine Initialisierung von Pmax mit Pmax(k) = Ppv(k). Mit Schritt 364 wird der Suchstrom Ipv in k Schritten, z.B. in einer Rampe, bis zu einem maximalen Suchstrom erhöht. Bei 365 wird Pmax bestimmt: Pmax(k) = max(Pmax(k-1), Ppv(k)).

Im Vergleichschritt 369 wird geprüft, ob die Abbruchbedingung

$$Upv < Pmax / min(Pnenn / (Ustart * ku), Isuch)$$

erfüllt ist oder der maximale Suchstrom (z.B. 20) erreicht wurde. Ist dies nicht der Fall, wird zum Schritt 364 zurückgesprungen und der Suchstrom weiter erhöht. Ist ein MPP mit einer höheren Leistung gefunden, so wird dieser als aktueller Arbeitspunkt gespeichert und kann in einem weiteren Schritt angefahren bzw. eingestellt werden. Wurde der maximale Suchstrom erreicht oder ist die Abbruchbedingung erfüllt, ohne einen höheren MPP zu finden, so wird der bisherige oder zuletzt gefundene MPP beibehalten.

Die Suche wird bei 368 beendet.

Nachfolgend wird beschrieben, wie der Suchbereich weiter eingeschränkt werden kann, um zu gewährleisten, dass während der Suche eine definierte Mindestleistung 14 nicht unterschritten wird. Dies ist vor allem dann erforderlich, wenn die zum Betrieb des PV-Wechselrichters benötigte Leistung lediglich über einen PV-String bezogen wird und nicht über das einzuspeisende Netz bezogen werden soll oder kann. Ein Unterschreiten der zum Betrieb des Wechselrichters erforderlichen Mindestleistung 14 während der Suche könnte dann zu einem kurzeitigen Ausfall des Wechselrichters führen. Die Einschränkung erfolgt hierbei durch Herabsetzen des maximalen Suchstroms oder der maximalen Suchspannung beziehungsweise durch Hochsetzen des minimalen Suchstroms oder der minimalen Suchspannung, nicht durch Abbruchbedingungen.

Zunächst erfolgt die Erläuterung der rechtsseitigen Suche 5.

Um zu gewährleisten, dass eine definierte Mindestleistung 14 während der rechtsseitigen Suche in Verbindung mit den Abbruchbedingungen (G01) und (G02) nicht unterschritten wird, wird in Abhängigkeit vom aktuellen Arbeitspunkt der suchbare Bereich gegebenenfalls zusätzlich eingeschränkt.

Zunächst wird die Gleichung bei Spannungsvorgabe hergeleitet und im Anschluss die bei Stromvorgabe.

Spannungsvorgabe (nur in Verbindung mit Abbruchkriterium für rechtsseitige Suche):

Allgemein soll immer gewährleistet sein, dass die aktuelle Leistung größer als die minimale Leistung ist:

$$Upv * Ipv >= Pmin$$

Upv := aktuelle PV-Spannung

Ipv := aktueller PV-Strom

Pmin := minimal erlaubte Leistung während der Suche

Bei der rechtsseitigen Suche wird die Suche spätestens Abgebrochen, wenn:

$$Ipv < Pmax / Usuch$$

Ipv := aktueller PV-Strom
Pmax := bisher gefundene maximale Leistung
Usuch := maximale Suchspannung (oder maximale Tracking-Spannung oder maximale Wechselrichter PV-Spannung)

Daraus folgt, dass der PV-Strom größer oder gleich der bisher gefundenen Leistung dividiert durch die maximale Suchspannung ist:

$$Ipv >= Pmax / Usuch$$

Ipv = aktueller PV-Strom
Pmax := bisher gefundene maximale Leistung
Usuch := maximale Suchspannung (oder maximale Tracking-Spannung oder maximale Wechselrichter PV-Spannung)

Der PV-Strom ist daher mindestens gleich der bisher gefundenen Leistung dividiert durch die maximale PV-Suchspannung. Wird dieser in die zuerst genannte Gleichung eingesetzt folgt:

$$Upv * Pmax / Usuch >= Pmin$$

Upv := aktuelle PV-Spannung
Pmax := bisher gefundene maximale Leistung
Usuch := maximale Suchspannung (oder maximale Tracking-Spannung oder maximale Wechselrichter PV-Spannung) und Pmin = minimal erlaubte Leistung während der Suche

Soll jetzt die maximale erlaubte Suchspannung in Abhängigkeit von der aktuellen Spannung, der minimalen erlaubten Leistung und der bisher gefundenen maximalen Leistung berechnet werden, so folgt:

$$U''such = Upv * Pmax / Pmin$$
$$(G12)$$

Mit:

Upv := aktuelle PV-Spannung,
Pmax := bisher gefundene maximale Leistung,
U"such := maximale Suchspannung unter Berücksichtigung einer definierten Mindestleistung und
Pmin := minimal erlaubte Leistung während der Suche.

Unter Berücksichtigung der maximalen Suchspannung Usuch, ergibt sich als maximale Suchspannung:

$$maximale\ Suchspannung = min(U''such, Usuch)$$
$$(G13)$$

$$maximale\ Suchspannung = min(Upv * Pmax / Pmin, Usuch) \qquad (G14)$$

Mit:

U"such := maximale Suchspannung unter Berücksichtigung einer definierten Mindestleistung,

Usuch := maximale Suchspannung (oder maximale Tracking-Spannung oder maximale Wechselrichter PV-Spannung),

Upv := aktuelle PV-Spannung,

Pmax := bisher gefundene maximale Leistung, und

Pmin := minimal erlaubte Leistung während der Suche.

Oben genannte maximale Suchspannung sollte idealerweise als Grenzwert für die Spannungsvorgabe bei der Suche genutzt werden. Sie kann aber auch in die bisher genannten Abbruchbedingungen zur Einschränkung des Suchbereichs eingesetzt werden. Die oben genannte maximale Suchspannung wird in jedem Schritt neu berechnet.

Die angegebene Gleichung für die Spannungsvorgabe kann auch als Abbruchbedingung oder Einschränkung des Suchbereichs bei Stromvorgabe genutzt werden.

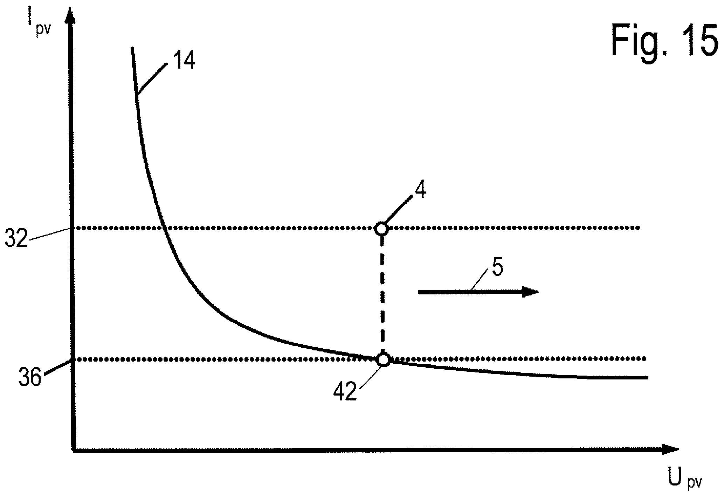

Die Herleitung der entsprechenden Einschränkung für die rechtsseitige Suche und bei Stromvorgabe wird im Folgenden anhand Fig. 15 dargestellt.

Die während der Suche erlaubte Mindestleistung 14 ist als Kurve konstanter Leistung eingezeichnet. Bei der rechtsseitigen Suche 5 kann die Spannung Upv eines PV-Moduls oder eines Photovoltaikgenerators physikalisch bedingt nicht sinken. Zur Berechnung des minimal erlaubten Stroms bei der rechtsseitigen Suche 5 muss daher die Spannung Upv als konstant angesehen werden (schlimmster Fall). Diese lässt sich dann auf die minimal erlaubte Leistung loten. Der Strom in einem solchen Schnittpunkt Grenz-Suchstrom 42 ist ausgehend vom aktuellen Arbeitspunkt 4 mit einem Startstrom 32 der minimal erlaubte Strom während der rechtsseitigen Suche 5, wenn die vorgegebene Mindestleistung 14 nicht unterschritten werden darf. Er errechnet sich wie folgt:

$$I''_{suchmin} = P_{min} / U_{pv}$$

$$(G15)$$

Mit.

I"suchmin := minimaler Suchstrom unter Berücksichtigung einer definierten Mindestleistung,

Pmin := minimal erlaubte Leistung während der Suche und

Upv := aktuelle PV-Spannung.

Unter Berücksichtigung einer zusätzlich festgelegten Grenze für den minimalen Suchstrom während der Suche ergibt sich für den Sollwert bei der rechtsseitigen Suche:

$$\text{minimaler Suchstrom} = \max(I''_{suchmin}, I_{min})$$

$$(G16)$$

$$\text{minimaler Suchstrom} = \max(P_{min} / U_{pv}, I_{min}) \qquad (G17)$$

Mit:

I"suchmin = minimaler Suchstrom unter Berücksichtigung einer definierten Mindestleistung,

Imin := zusätzlich festgelegte Grenze für den minimalen Strom,

Pmin := minimal erlaubte Leistung während der Suche und

Upv := aktuelle PV-Spannung

Der oben genannte minimale Suchstrom sollte idealerweise als Grenzwert für die Stromvorgabe bei der Suche genutzt werden und wird als Grenz-Suchstrom 36 bezeichnet. Er wird in jedem Schritt neu berechnet.

Die angegebene Gleichung für die Stromvorgabe kann auch als Abbruchbedingung oder Einschränkung des Suchbereichs bei Spannungsvorgabe genutzt werden.

Um zu gewährleisten, dass eine definierte Mindestleistung 14 während der linksseitigen Suche 6 nicht unterschritten wird, wird in Abhängigkeit vom aktuellen Arbeitspunkt der suchbare Bereich gegebenenfalls zusätzlich eingeschränkt. Dazu wird die minimal erlaubte Spannung während der Suche gegebenenfalls hochgesetzt.

Zunächst wird die Gleichung bei Spannungsvorgabe hergeleitet und im Anschluss die bei Stromvorgabe.

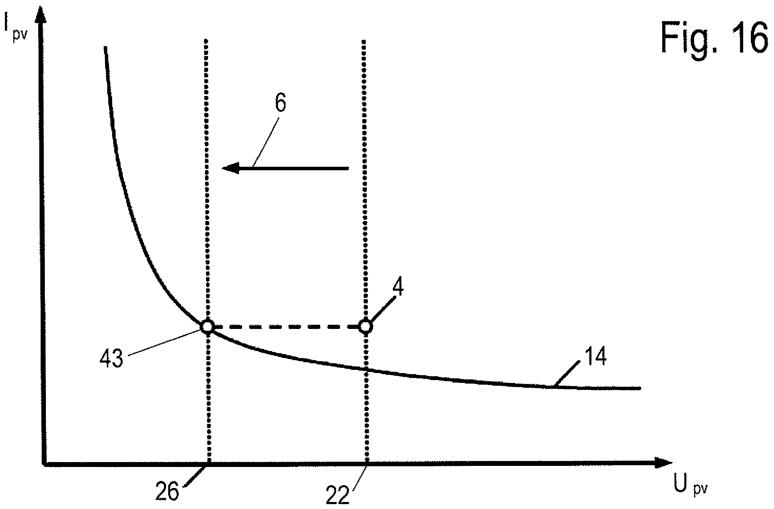

Die Herleitung der entsprechenden Einschränkung für die linksseitige Suche 6 wird im Folgenden anhand Fig. 16 dargestellt.

Die während der Suche erlaubte Mindestleistung 14 ist als Kurve konstanter Leistung eingezeichnet. Bei der linksseitigen Suche 6 kann der Strom Ipv eines PV-Moduls oder eines Photovoltaikgenerators physikalisch bedingt nicht sinken. Zur Berechnung der minimal erlaubten Spannung bei der linksseitigen Suche 6 muss daher der Strom Ipv als konstant angesehen werden (schlimmster Fall). Der aktuelle Strom lässt sich dann auf die minimal erlaubte Leistung loten. Die Spannung in einem Schnittpunkt Grenz-Suchspannung 43 ist ausgehend vom aktuellen Arbeitspunkt 4 die minimal erlaubte Spannung (Grenz-Suchspannung 26) während der linksseitigen Suche, wenn die vorgegebene Mindestleistung nicht unterschritten werden darf. Sie errechnet sich wie folgt:

$$U''suchmin = Pmin / Ipv$$

$$(G18)$$

Mit:

U"suchmin = minimale Suchspannung unter Berücksichtigung einer definierten Mindestleistung,
Pmin = minimal erlaubte Leistung während der Suche und
Ipv = aktueller PV-Strom.

Unter Berücksichtigung einer zusätzlich festgelegten Grenze für die minimale Spannung während der Suche ergibt sich für den Sollwert bei der linksseitigen Suche:

$$minimale\ Suchspannung = max\ (U''suchmin,\ Umin)$$

$$(G19)$$

$$minimale\ Suchspannung = max\ (Pmin / Ipv,\ Umin)$$

$$(G20)$$

Mit:

U"suchmin = minimale Suchspannung unter Berücksichtigung einer definierten Mindestleistung,
Umin = zusätzlich festgelegte Grenze für die minimale Spannung,
Pmin = minimal erlaubte Leistung während der Suche und
Ipv = aktueller PV-Strom

Oben genannte minimale Suchspannung (Grenz-Suchspannung 26) sollte idealerweise als Grenzwert für die Spannungsvorgabe bei der Suche genutzt werden. Sie wird in jedem Schritt neu berechnet.

Die angegebene Gleichung für die Spannungsvorgabe kann auch als Abbruchbedingung oder Einschränkung des Suchbereichs bei Stromvorgabe genutzt werden.

Stromvorgabe (nur in Verbindung mit Abbruchkriterium für linksseitige Suche):
Allgemein soll immer gewährleistet sein, dass die aktuelle Leistung größer als die minimale Leistung ist:

$$Upv * Ipv >= Pmin$$

Upv = aktuelle PV-Spannung
Ipv := aktueller PV-Strom
Pmin := minimal erlaubte Leistung während der Suche

Bei der linksseitigen Suche 6 wird die Suche spätestens abgebrochen, wenn:

$$Upv < Pmax / Isuch$$

Upv := aktuelle PV-Spannung
Pmax := bisher gefundene maximale Leistung
Isuch := maximaler Suchstrom (oder maximaler Wechselrichter PV-Strom).

Daraus folgt, dass die PV-Spannung größer oder gleich der bisher gefundenen Leistung dividiert durch den maximalen Suchstrom ist:

$$Upv >= Pmax / Isuch$$

Upv := aktuelle PV-Spannung
Pmax := bisher gefundene maximale Leistung
Isuch := maximaler Suchstrom (oder maximaler Wechselrichter PV-Strom).

Die PV-Spannung ist daher mindestens gleich der bisher gefundenen Leistung dividiert durch den maximalen PV-Suchstrom. Wird diese in die zuerst genannte Gleichung eingesetzt folgt:

$$Pmax / Isuch * Ipv >= Pmin$$

Ipv := aktueller PV-Strom
Pmax := bisher gefundene maximale Leistung
Isuch := maximaler Suchstrom (oder maximaler Wechselrichter PV-Strom) u
Pmin := minimal erlaubte Leistung während der Suche.

Soll jetzt der maximal erlaubte Suchstrom in Abhängigkeit von dem aktuellen Strom, der minimalen erlaubten Leistung und der bisher gefundenen maximalen Leistung berechnet werden, so folgt:

$$I''such = Ipv * Pmax / Pmin$$

$$(G21)$$

Mit:

Ipv := aktueller PV-Strom,
Pmax := bisher gefundene maximale Leistung,
I"such := maximaler Suchstrom unter Berücksichtigung einer definierten Mindestleistung und
Pmin := minimal erlaubte Leistung während der Suche.

Unter Berücksichtigung des maximalen Suchstroms Isuch, ergibt sich als maximaler Suchstrom:

$$\text{maximaler Suchstrom} = min(I''such, Isuch)$$

$$(G22)$$

$$\text{maximaler Suchstrom} = min(Ipv * Pmax / Pmin, Isuch)$$

$$(G23)$$

Mit:

I"such := maximaler Suchstrom unter Berücksichtigung einer definierten Mindestleistung,

Isuch := maximaler Suchstrom (oder maximaler Wechselrichter PV-Strom),

Ipv := aktueller PV-Strom,

Pmax := bisher gefundene maximale Leistung, und

Pmin := minimal erlaubte Leistung während der Suche.

Oben genannter maximaler Suchstrom sollte idealerweise als Grenzwert für die Stromvorgabe (Grenz-Suchstrom 36) bei der Suche genutzt werden. Er kann aber auch in die bisher genannten Abbruchbedingungen zur Einschränkung des Suchbereichs eingesetzt werden. Der oben genannte maximale Suchstrom wird in jedem Schritt neu berechnet.

Die angegebene Gleichung für die Stromvorgabe kann auch als Abbruchbedingung oder Einschränkung des Suchbereichs bei Spannungsvorgabe genutzt werden.

Es folgt eine Beschreibung für den Entfall der Suche in entgegengesetzter Richtung.

Wird während der Suche ein Punkt höherer Leistung gefunden, so kann die Suche in die entgegengesetzte Richtung gegebenenfalls entfallen.

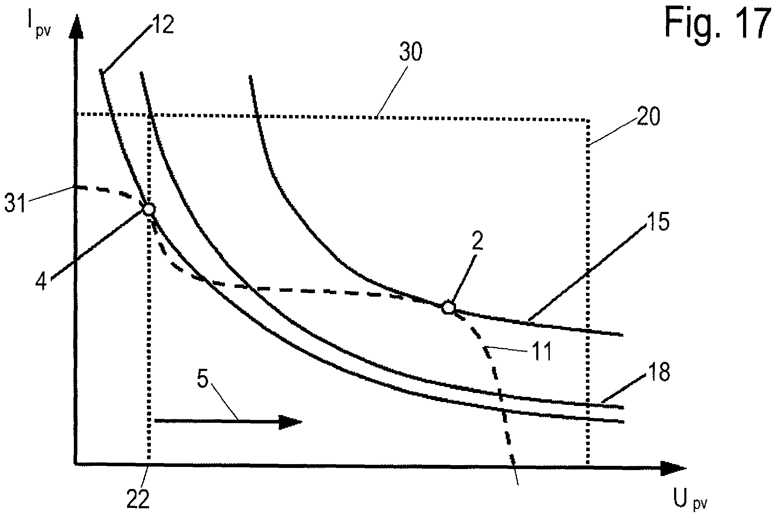

Die Herleitung der Entscheidung, ob bei einer rechtsseitigen Suche die Suche in die entgegengesetzte Richtung entfallen kann, erfolgt anhand der Fig. 17. Ausgehend von der maximalen Steilheit in einer IU-Kennlinie (Istkennlinie 11) eines PV-Moduls oder eines PV Generators, kann die PV-Spannung Upv bei Anheben des PV-Stroms Ipv maximal konstant bleiben. In Verbindung mit dem maximalen Suchstrom 30 lässt sich daher die maximal mögliche Leistung bei der linksseitigen Suche wie folgt berechnen:

$$\text{Maximal mögliche Leistung bei linksseitiger Suche} = \text{Ustart} * \text{Isuch}$$

Mit:

Ustart := PV-Spannung (Startspannung 22) vor der Suche und

Isuch := maximaler Suchstrom 30.

Überschreitet die bei der rechtsseitigen Suche 5 gefundene Leistung (rechtsseitige Maximalleistung 15 in einem gefundenen globalen Punkt maximaler Leistung MPP 2) die mögliche linksseitige Maximalleistung 18 bei linksseitiger Suche, so kann die linksseitige Suche entfallen. Der Startpunkt 4 vor der Suche kann dabei sowohl ein globaler oder lokaler Punkt maximaler Leistung MPP sein, als auch ein beliebiger Punkt auf der IU-Kennlinie oder Istkennlinie 11.

Die entsprechende Bedingung dafür, dass die linksseitige Suche 6 entfallen kann lautet:

$$\text{Ustart} * \text{Isuch} <= \text{Pmax}$$

$$(G24)$$

Mit:

Ustart := PV-Spannung vor der Suche,

Isuch := maximaler Suchstrom (oder maximaler Wechselrichter PV-Strom) und

Pmax := bei der Suche gefundene maximale Leistung.

Der hier eingesetzte maximale Suchstrom 30 lässt sich ebenfalls über die Nennleistung des angeschlossenen Photovoltaikgenerators entsprechend auf den Nenn-Suchstrom 35 reduzieren.

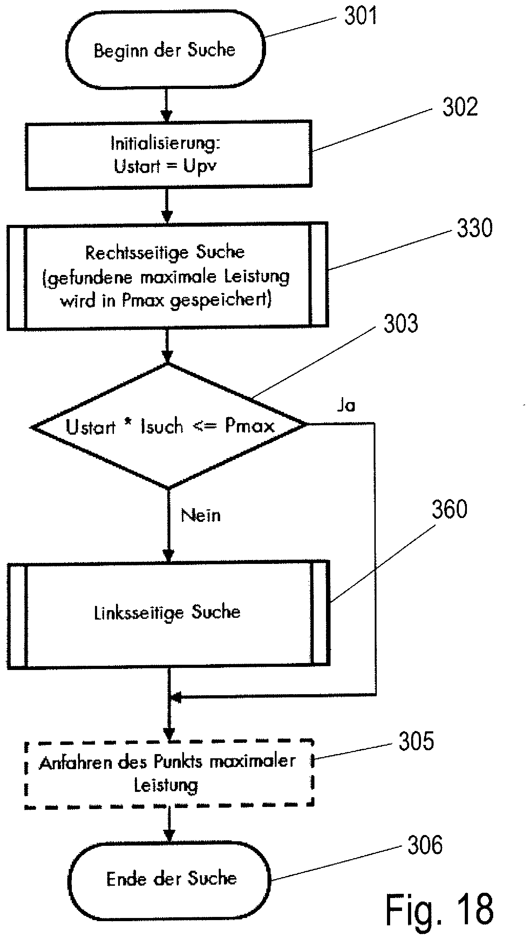

Das entsprechende Ablaufdiagramm ist bei Spannungs- oder Stromvorgabe in Fig. 18 dargestellt.

Hierbei gilt:

Ustart := PV-Spannung vor der Suche,

Isuch := maximaler Suchstrom (oder maximaler Wechselrichter PV-Strom) und

Pmax := bei der Suche gefundene maximale Leistung.

Bei 301 beginnt die Suche. Im Schritt 302 erfolgt eine Initialisierung Ustart = Upv. Daraufhin folgt eine rechtsseitige Suche im Schritt 330, wobei eine gefundene maximale Leistung als Pmax gespeichert wird.

In einem Vergleichsschritt 303 wird die Bedingung

$$Ustart * Isuch <= Pmax$$

geprüft, ob eine weitere linksseitige Suche entfallen kann. Ist dies nicht der Fall, so wird im Schritt 360 eine linksseitige Suche durchgeführt.

Kann die linksseitige Suche aufgrund des Vergleichs in 303 entfallen, so wird der Schritt 360 übersprungen.

Im Schritt 305 wird der gefundene Punkt maximaler Leistung angefahren.

Die Suche wird im Schritt 306 beendet.

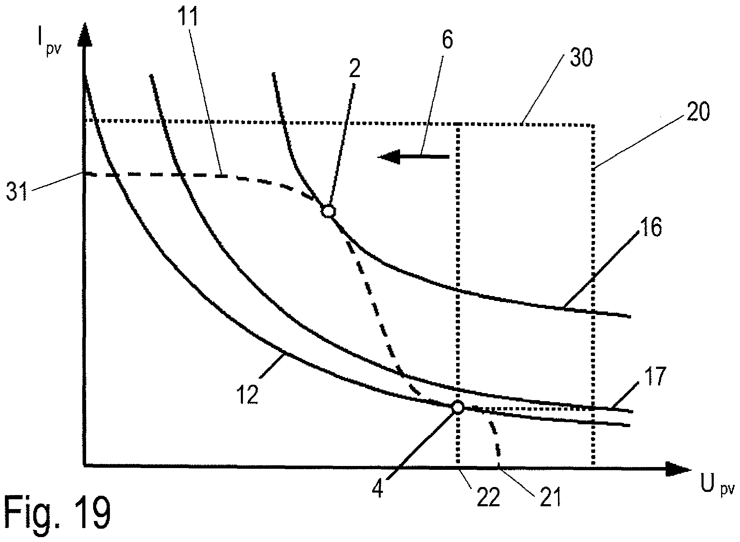

Die Herleitung der Entscheidung, ob bei einer linksseitigen Suche die Suche in die entgegengesetzte Richtung entfallen kann, erfolgt anhand der Fig. 19. Aufgrund der Charakteristik einer IU-Kennlinie kann der Strom Ipv bei der rechtsseitigen Suche maximal konstant bleiben. In Verbindung mit der maximalen Suchspannung 20 lässt sich daher die mögliche Maximalleistung 17 bei der rechtsseitigen Suche berechnen:

$$Maximal\ mögliche\ Leistung\ bei\ rechtsseitiger\ Suche = Istart * Usuch$$

Mit Istart := PV-Strom vor der Suche und Usuch := maximale Suchspannung.

Überschreitet bei der linksseitigen Suche 6 ausgehend von einem Startpunkt 4 einer Maximalleistung 12 mit einer Startspannung 22 eine gefundene linksseitige Maximalleistung 16 mit einem globalen Punkt maximaler Leistung MPP 2 die mögliche rechtsseitige Maximalleistung 17 bei rechtsseitiger Suche, so kann die rechtsseitige Suche entfallen. Der Startpunkt 4 vor der Suche kann dabei sowohl ein globaler oder lokaler Punkt maximaler Leistung MPP sein, als auch ein beliebiger Punkt auf der IU-Kennlinie oder Istkennlinie 11.

Die entsprechende Bedingung dafür, dass die rechtsseitige Suche entfallen kann lautet:

$$Istart * Usuch <= Pmax$$

$$(G25)$$

Mit:

Istart := PV-Strom vor der Suche,

Usuch := maximale Suchspannung (oder maximale Tracking-Spannung oder maximale Wechselrichter PV-Spannung) und

Pmax := bei der Suche gefundene maximale Leistung.

Die hier eingesetzte maximale Suchspannung 20 lässt sich ebenfalls über die Nennleistung des angeschlossenen Photovoltaikgenerators und/oder über die Suchbereichseinschränkung zur Gewährleistung einer definierten Mindestleistung 14 entsprechend auf eine Nenn-Suchspannung 25 reduzieren.

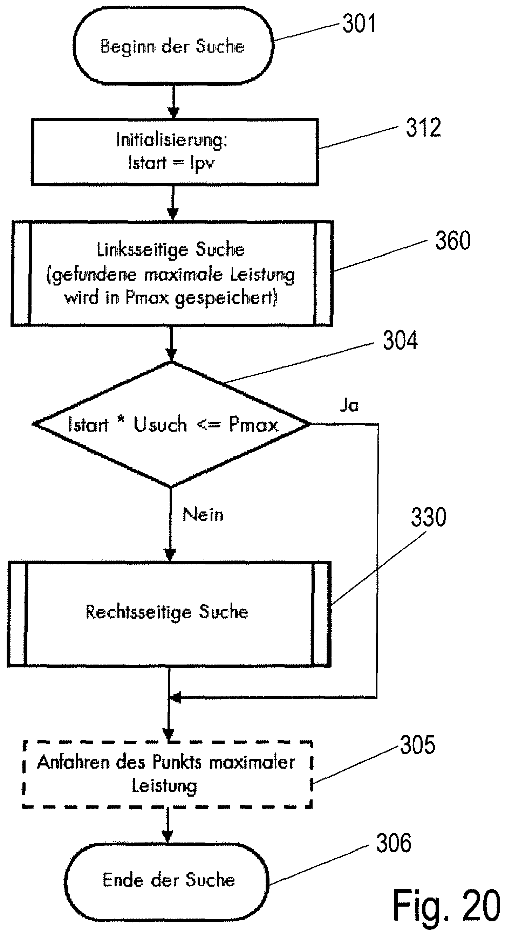

Das entsprechende Ablaufdiagramm ergibt sich bei Spannungs- oder Stromvorgabe wie in Fig. 20 dargestellt ist.

Hierbei gilt:

Istart = PV-Strom vor der Suche,

Usuch = maximale Suchspannung (oder maximale Tracking-Spannung oder maximale Wechselrichter PV-Spannung) und

Pmax = bei der Suche gefundene maximale Leistung.

Start der Suche erfolgt im Schritt 301. Im Schritt 312 erfolgt eine Initialisierung Istart = Ipv. Daraufhin folgt eine linksseitige Suche im Schritt 360, wobei eine gefundene maximale Leistung als Pmax gespeichert wird.

In einem Vergleichsschritt 304 wird die Bedingung

$$Istart * Usuch <= Pmax$$

geprüft, ob eine weitere rechtsseitige Suche entfallen kann. Ist dies nicht der Fall, so wird im Schritt 330 eine linksseitige Suche durchgeführt.

Kann die rechtsseitige Suche aufgrund des Vergleichs in 304 entfallen, so wird der Schritt 330 übersprungen.

Im Schritt 305 wird der gefundene Punkt maximaler Leistung angefahren.

Die Suche wird im Schritt 306 beendet.

Damit die Bedingungen für den Entfall der Suche in die entgegengesetzte Richtung beim Auffinden einer höheren Leistung greifen können, muss mit der richtigen Suchrichtung begonnen werden. Es ist daher sinnvoll, sich vor Beginn der Suche für die richtige Suchrichtung zu entscheiden. Dies kann mit Hilfe der maximal möglichen Leistung 18 bei linksseitiger Suche und der maximal möglichen Leistung 17 bei rechtsseitiger Suche erfolgen. Ist die maximal mögliche Leistung 17 bei rechtsseitiger

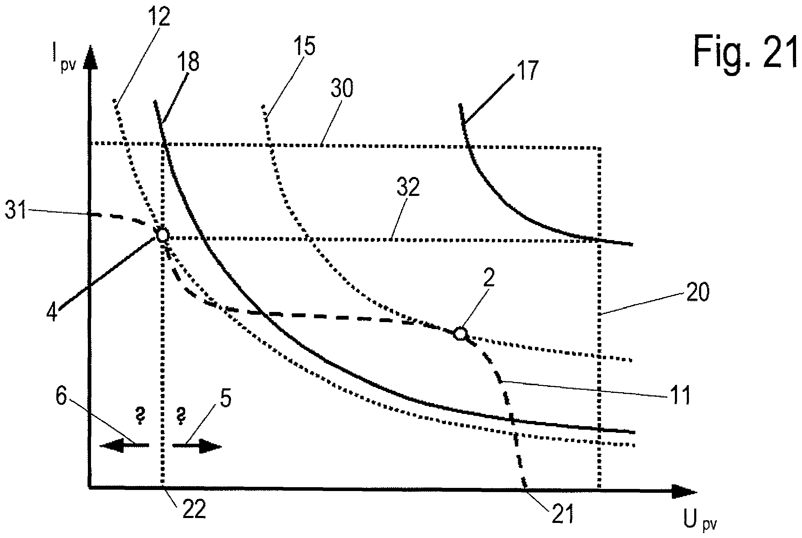

Suche größer als die maximal mögliche Leistung 18 bei linksseitiger Suche, so ist es sinnvoll, mit der rechtsseitigen Suche zu beginnen. Wird hierbei ein Punkt höherer Leistung gefunden, so muss für den Entfall der Suche in die entgegengesetzte Richtung lediglich die kleinere der beiden Leistungen überschritten werden, wie in Fig. 21 und 23 gezeigt ist. Der Startpunkt 4 vor der Suche und bei der Auswahl der Suchrichtung kann dabei sowohl ein globaler oder lokaler Punkt maximaler Leistung MPP sein, als auch ein beliebiger Punkt auf der IU-Kennlinie oder Istkennlinie 11.

Fig. 21 zeigt eine beispielhafte grafische Darstellung zur Veranschaulichung einer Auswahl der Suchrichtung mit anfänglicher rechtsseitiger Suche.

Der Suchbereich ist durch eine mögliche rechtsseitige Maximalleistung 17 begrenzt. Die Istkennlinie 11 weist einen globalen Punkt maximaler Leistung MPP 2 auf, welcher auf der Kurve einer rechtsseitigen Maximalleistung 15 liegt. Die Kurve mit dem Bezugszeichen 18 gibt eine mögliche linksseitige Maximalleistung an. Die Startspannung 22 und der Startstrom 32 ergeben sich anhand des Startpunkts 4 der bisherigen Maximalleistung 12, Suchspannung 20 und Suchstrom 30 sind als Maximalwerte angegeben.

Die Bedingung dafür, dass mit der rechtsseitigen Suche 5 begonnen werden soll lautet (siehe Fig. 21):

$$Istart * Usuch > Ustart * Isuch \quad \rightarrow \quad \text{Rechtsseitige Suche zuerst}$$

$$(G26)$$

Mit:

Istart = PV-Strom vor der Suche,
Usuch := maximale Suchspannung (oder maximale Tracking-Spannung oder maximale Wechselrichter PV-Spannung),
Ustart := PV-Spannung vor der Suche und
Isuch := maximaler Suchstrom (oder maximaler Wechselrichter PV-Strom).

Der hier eingesetzte maximale Suchstrom 30 lässt sich ebenso über die Nennleistung des angeschlossenen Photovoltaikgenerators entsprechend reduzieren. Die eingesetzte maximale Suchspannung 20 lässt sich über die Nennleistung des angeschlossenen Photovoltaikgenerators und/oder über die Suchbereichseinschränkung zur Gewährleistung einer definierten Mindestleistung 14 entsprechend reduzieren.

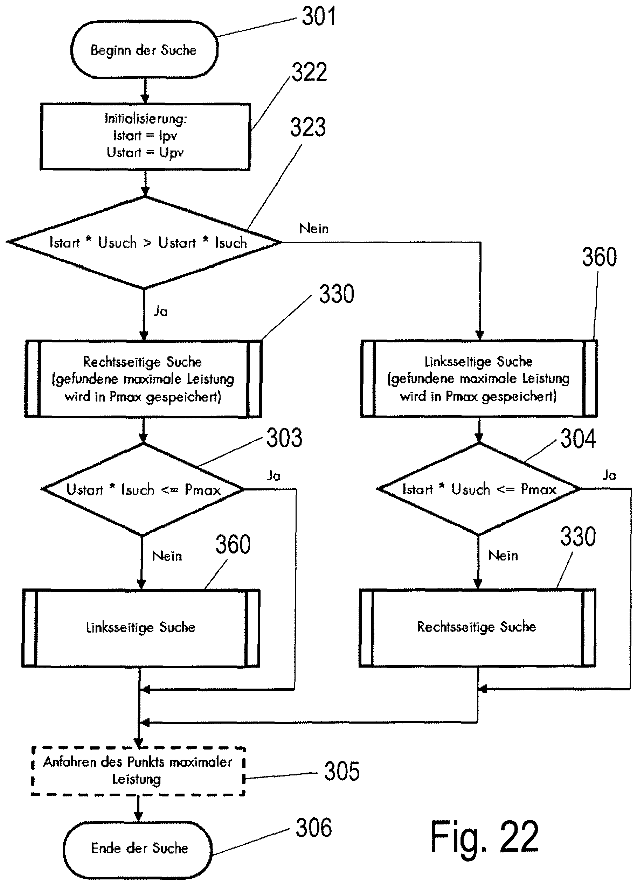

Das entsprechende Ablaufdiagramm bei Spannungs- oder Stromvorgabe ist in Fig. 22 gezeigt.

Hierbei gilt:

Istart := PV-Strom vor der Suche,
Usuch := maximale Suchspannung (oder maximale Tracking-Spannung oder maximale Wechselrichter PV-Spannung),
Ustart := PV-Spannung vor der Suche und
Isuch := maximaler Suchstrom (oder maximaler Wechselrichter PV-Strom).

Beginn der Suche erfolgt im Schritt 301, eine Initialisierung für Istart=Ipv und Ustart=Upv schließt sich im Schritt 322 an. Mit 323 folgt ein Vergleichsschritt, in dem entschieden wird, welche Suchrichtung zuerst eingeschlagen wird. Die Vergleichsbedingung lautet

$$Istart * Usuch > Ustart * Isuch$$

Ist diese Bedingung erfüllt, so beginnt die Suche mit der rechtsseitigen Suche im Schritt 330, gefolgt von einem Vergleichsschritt 303, in dem mit der Bedingung

$$Ustart * Isuch <= Pmax$$

geprüft wird, ob die Suche linksseitig mit Schritt 360 weitergeführt oder übersprungen wird. Im Schritt 305 wird der Punkt maximaler Leistung angefahren und im Schritt 306 wird die Suche beendet.

Wird die Bedingung

$$\text{Istart} * \text{Usuch} > \text{Ustart} * \text{Isuch}$$

im Schritt 323 nicht erfüllt, so wird in dem Schritt 360 zuerst mit der linksseitigen Suche begonnen. In dem Vergleichsschritt 304 wird mit der Bedingung

$$\text{Istart} * \text{Usuch} <= \text{Pmax}$$

geprüft, ob die Suche rechtsseitig mit Schritt 330 weitergeführt oder übersprungen wird. Im Schritt 305 wird der Punkt maximaler Leistung angefahren und im Schritt 306 wird die Suche beendet.

Sind beide Leistungen in der Bedingung (G26) gleich groß, so ist die erste Suchrichtung egal.

Diese Bedingung (G26) kann ebenfalls zu einer Bedingung für den Beginn mit der linksseitigen Suche umformuliert werden:

$$\text{Istart} * \text{Usuch} < \text{Ustart} * \text{Isuch} \quad \rightarrow \text{ Linksseitige Suche zuerst} \qquad (G27)$$

Mit:

Istart := PV-Strom vor der Suche,
Usuch := maximale Suchspannung (oder maximale Tracking-Spannung oder maximale Wechselrichter PV-Spannung),
Ustart := PV-Spannung vor der Suche und
Isuch := maximaler Suchstrom (oder maximaler Wechselrichter PV-Strom).

Der Unterschied zur Bedingung (G26) besteht in der Umkehrung des Ungleichheitszeichens.

In Fig. 23 ist eine beispielhafte grafische Darstellung zur Veranschaulichung einer Auswahl der Suchrichtung mit anfänglicher linksseitiger Suche dargestellt.

Der Suchbereich ist durch eine mögliche linksseitige Maximalleistung 18 begrenzt. Die Istkennlinie 11 weist einen globalen Punkt maximaler Leistung MPP 2 auf, welcher auf der Kurve einer linksseitigen Maximalleistung 16 liegt. Die Kurve mit dem Bezugszeichen 17 gibt eine mögliche rechtsseitige Maximalleistung an. Die Startspannung 22 und der Startstrom 32 ergeben sich anhand des Startpunkts 4 der bisherigen Maximalleistung 12, Suchspannung 20 und Suchstrom 30 sind als Maximalwerte angegeben.

Der hier eingesetzte maximale Suchstrom 30 lässt sich ebenso über die Nennleistung des angeschlossenen Photovoltaikgenerators entsprechend reduzieren. Die eingesetzte maximale Suchspannung 20 lässt sich über die Nennleistung des angeschlossenen Photovoltaikgenerators und/oder über die Suchbereichseinschränkung zur Gewährleistung einer definierten Mindestleistung entsprechend reduzieren.

Das entsprechende Ablaufdiagramm bei Spannungs- oder Stromvorgabe ist in Fig. 22 enthalten, indem im Vergleichsschritt 323 die Bedingung (G26) nicht erfüllt ist (Umkehrung des Ungleichheitszeichens). Die Erläuterungen sind dazu bereits oben angegeben.

Die Erfindung ist nicht auf das oben erläuterte Ausführungsbeispiel beschränkt. Sie ist selbstverständlich im Rahmen der angefügten Ansprüche modifizierbar.

So kann zum Beispiel dass erfindungsgemäße Verfahren zur Suche nach einem Punkt höherer bzw. maximaler Leistung genutzt werden, um ein bestehendes Trackingverfahren in den globalen Punkt maximaler Leistung MPP zu überführen oder um einen Startpunkt für ein Trackingverfahren zu finden, es kann aber auch selbst als Trackingverfahren eingesetzt werden. Die Erfindung ist nicht auf eines oder mehrere der vorstehend beschrieben Ausführungsbeispiele zu beschränken. Zudem ist keine Beschränkung auf den reinen Wortlaut der Ansprüche gegeben sondern es fallen auch äquivalente unter deren Wortlaut, mit welche das Ziel mit anderen Mitteln auf einem anderen Weg erreicht wird.

Insbesondere können die unterschiedlichen Abbruchkriterien der Beschreibung in vielfältiger Weise kombiniert, ergänzend und angepasst Verwendung finden.

Bezugszeichen

| | |
|---|---|
| 1 | Punkt maximaler Leistung (MPP) |
| 2 | Globaler Punkt maximaler Leistung MPP |
| 3 | Lokaler Punkt maximaler Leistung MPP |
| 4 | Startpunkt |
| 5 | Rechtsseitige Suche |
| 6 | Linksseitige Suche |
| 10 | Nennkennlinie |
| 11 | Istkennlinie |
| 12 | Maximalleistung |
| 13 | Leistungsbereich |
| 14 | Mindestleistung |
| 15 | Rechtsseitige Maximalleistung |
| 16 | Linksseitige Maximalleistung |
| 17 | Rechtsseitige mögliche Maximalleistung |
| 18 | Linksseitige mögliche Maximalleistung |
| 19 | Verlustleistung |
| 20 | Maximale Suchspannung |
| 21 | Leerlaufspannung |
| 22 | Startspannung |
| 23 | Rechtsseitige Abbruchspannung |
| 24 | Linksseitige Abbruchspannung |
| 25 | Nenn-Suchspannung |
| 26 | Grenz-Suchspannung |
| 30 | Maximaler Suchstrom |
| 31 | Kurzschlussstrom |
| 32 | Startstrom |
| 33 | Rechtsseitiger Abbruchstrom |
| 34 | Linksseitiger Abbruchstrom |
| 35 | Nenn-Suchstrom |
| 36 | Grenz-Suchstrom |
| 40, 40' | Rechtsseitiger Suchendpunkt |
| 41, 41' | Linksseitiger Suchendpunkt |
| 42 | Schnittpunkt Grenz-Suchstrom |
| 43 | Schnittpunkt Grenz-Suchspannung |
| 100...500 | Verfahrensschritte |
| I | Strom |
| D | Diode |
| N | Leistung |
| PV | Photovoltaikgenerator |
| PV' | Stromquelle |
| Ri | Innenwiderstand |
| RL | Last |
| t | Zeit |
| U | Spannung |

**Patentansprüche**

1. Verfahren zum Ermitteln eines globalen Punktes maximaler Leistung (MPP) eines Photovoltaikgenerators (PV) durch ein Variieren von wenigstens einem Parameter der beiden Parameter Suchspannung und Suchstrom mittels einer dem Photovoltaikgenerator nachgeschalteten Einrichtung, innerhalb eines maximal absuchbaren Suchgebietes auf einer Leistungs-/Spannungskurve, mit folgenden Verfahrensschritten:

   a) Initialisieren durch Festlegen eines Startpunktes (4) mit einer Startleistung mit einer Startspannung und einem Startstrom;
b) Suchen des globalen Punktes maximaler Leistung (MPP) in nur einer Suchrichtung (5, 6) durch wiederholtes Variieren der Suchspannung oder des Suchstroms in dem Suchgebiet unter Berücksichtigung von mindestens zwei einschränkenden Bedingungen zur Einschränkung des Suchgebietes, wobei mindestens eine der einschränkenden Bedingungen zur Einschränkung des Suchbereichs unter Auswertung der in einem während der Suche bereits erreichten Betriebszustand gegebenen Parameter ermittelt wird; und
c) Beenden der Suche, wenn eine der mindestens zwei einschränkenden Bedingungen zur Einschränkung des Suchgebietes in Schritt b) erfüllt ist.

2. Verfahren zum Ermitteln eines globalen Punktes maximaler Leistung (MPP) von Photovoltaikgeneratoren (PV) durch ein Variieren von wenigstens einem Parameter der beiden Parameter Suchspannung und Suchstrom mittels einer an Photovoltaikgenerator nachgeschalteten Einrichtung, innerhalb eines maximal absuchbaren Suchgebietes auf einer Leistungs-/Spannungskurve, mit folgenden Verfahrensschritten:

a) Initialisieren durch Festlegen eines Startpunktes (4) mit einer Startleistung mit einer Startspannung und einem Startstrom (Schritt 100);
b) Suchen des globalen Punktes maximaler Leistung (MPP) in einer ersten Suchrichtung (5, 6) durch wiederholtes Variieren der Suchspannung oder des Suchstroms in dem Suchgebiet unter Berücksichtigung mindestens einer ersten einschränkenden Bedingung zur Einschränkung des Suchgebietes, wobei die erste einschränkende Bedingung zur Einschränkung des Suchbereichs unter Auswertung der in einem während der Suche bereits erreichten Betriebszustand gegebenen Parameter ermittelt wird;
c) Beenden der Suche in der ersten Suchrichtung (5, 6), wenn die erste einschränkende Bedingung zur Einschränkung des Suchgebietes in Schritt b) erfüllt ist;
d) sodann Suchen des globalen Punktes maximaler Leistung (MPP) in einer zweiten Suchrichtung (5, 6) durch wiederholtes Variieren der Suchspannung oder des Suchstroms in dem Suchgebiet unter Berücksichtigung mindestens einer zweiten einschränkenden Bedingung zur Einschränkung des Suchgebietes , wobei die zweite einschränkende Bedingung zur Einschränkung des Suchbereichs unter Auswertung der in einem während der Suche bereits erreichten Betriebszustand gegebenen Parameter ermittelt wird; und
e) Beenden der Suche in der zweiten Suchrichtung (5, 6), wenn die zweite einschränkende Bedingung zur Einschränkung des Suchgebietes in Schritt d) erfüllt ist;

wobei nach dem Beenden der Suche der globale Punkt mit der maximal ermittelten Leistung eingestellt wird.

3. Verfahren nach Anspruch 2, **dadurch gekennzeichnet, dass** zwei oder mehr einschränkende Bedingungen zur Einschränkung eines Suchbereichs bei der Suche berücksichtigt werden.

4. Verfahren nach einem der vorhergehenden Ansprüche, **dadurch gekennzeichnet, dass** die mindestens eine einschränkende Bedingung zur Einschränkung eines Suchbereichs eine Abbruchbedingung umfasst, die aussagt, dass bei Beibehaltung einer Suchrichtung keine Aussicht auf eine Leistungszunahme bestehen kann.

5. Verfahren nach einem der vorhergehenden Ansprüche, **dadurch gekennzeichnet, dass** beim Festlegen des Suchgebietes am Startpunkt (4) eine maximale Suchspannung (20) und ein maximaler Suchstrom (30) berücksichtigt werden.

6. Verfahren nach einem der vorhergehenden Ansprüche, **dadurch gekennzeichnet, dass** das Suchen in der ersten Suchrichtung als eine rechtsseitige Suche erfolgt.

7. Verfahren nach einem der vorhergehenden Ansprüche, sofern direkt oder indirekt auf Anspruch 2 zurückbezogen, **dadurch gekennzeichnet, dass** das Suchen in der zweiten Suchrichtung als eine linksseitige Suche erfolgt.

8. Verfahren nach einem der vorhergehenden Ansprüche, **dadurch gekennzeichnet, dass** die Erfüllung einer der einschränkenden Bedingungen zur Einschränkung des Suchbereichs während des Ablaufes des Verfahren fortlaufend neu geprüft wird.

9. Verfahren nach einem der vorhergehenden Ansprüche, **dadurch gekennzeichnet, dass** die mindestens eine einschränkende Bedingung zur Einschränkung eines Suchbereichs eine Abbruchbedingung umfasst, die aussagt, dass bei Beibehaltung einer Suchrichtung eine Mindestleistung unterschritten wird.

10. Verfahren nach einem der vorhergehenden Ansprüche, **dadurch gekennzeichnet, dass** die mindestens eine einschränkende Bedingung eine Abbruchbedingung ist, welche einen oder mehrere folgender Parameter einzeln oder verknüpft berücksichtigt:

Upv := aktuelle Photovoltaikgeneratorspannung,
Ipv := aktueller Photovoltaikgeneratorstrom,
Ppv := aktuelle Photovoltaikgeneratorleistung,
Pmin := eine einzuhaltende Mindestleistung des Photovoltaikgenerators,
Pmax := während einer Suche bisher gefundene maximale Leistung und
Isuch : = maximaler Suchstrom (oder maximaler Wechselrichter PV-Strom),
Usuch := maximale Suchspannung,
Pnenn := Nennleistung des Photovoltaikgenerators,
ki := Faktor MPP-Strom/Kurzschlussstrom eines entsprechendem Zelltyp.

11. Verfahren nach einem der vorgehenden, auf Anspruch 2 zurückbezogenen Ansprüche, **dadurch gekennzeichnet, dass** die maximal mögliche Leistung in der ersten Suchrichtung höher als die maximal mögliche Leistung in der zweiten Suchrichtung ist.

12. Verfahren nach einem der vorhergehenden Ansprüche, **dadurch gekennzeichnet, dass** ein Speichern des jeweils ermittelten Punktes maximaler Leistung erfolgt.

13. Verfahren nach einem der vorhergehenden Ansprüche, sofern direkt oder indirekt auf Anspruch 1 zurückbezogen, **dadurch gekennzeichnet, dass** nach Beenden der Suche der Punkt mit der maximal ermittelten Leistung eingestellt wird.

14. Verfahren nach einem der vorhergehenden Ansprüche, **dadurch gekennzeichnet, dass** im Anspruch 2 das Suchen in der zweiten Suchrichtung entfällt, wenn eine einschränkende Bedingung zur Einschränkung des Suchgebietes erfüllt ist.

15. Verfahren nach einem der vorhergehenden, auf Anspruch 2 zurückbezogenen Ansprüche, **dadurch gekennzeichnet, dass** die erste einschränkende Bedingung unterschiedlich zur zweiten einschränkenden Bedingung ist.

16. Verfahren nach Anspruch 4, wobei die Leistungszunahme einen vorgegebenen, von Null verschiedenen Minimalwert übersteigt.

**Claims**

1. A method of determining a global point of maximum power (MPP) of a photovoltaic generator (PV) by varying at least one parameter of the two parameters search voltage and search current by means of a device connected downstream of the photovoltaic generator within a maximum searchable search area on a power/voltage curve, comprising the following method steps:

a) initialising by defining a starting point (4) with a starting power with a starting voltage and a starting current;
b) searching the global point of maximum power (MPP) in only one search direction (5, 6) by repeatedly varying the search voltage or the search current in the search area taking into account at least two restricting conditions for restricting the search area, wherein at least one of the restricting conditions for restricting the search area is determined by evaluating the parameters in an operating state already reached during the search; and
c) terminating the search if one of the at least two restrictive conditions for restricting the search area in step b) is met.

2. The method of determining a global point of maximum power (MPP) of photovoltaic generators (PV) by varying at least one parameter of the two parameters search voltage and search current by means of a device connected downstream of the photovoltaic generator within a maximum searchable search area on a power/voltage curve, comprising the following method steps:

a) initializing by defining a starting point (4) comprising a starting power with a starting voltage and a starting current (step 100);

b) searching the global point of maximum power (MPP) in a first search direction (5, 6) by repeatedly varying the search voltage or the search current in the search area taking into account at least one first restricting condition for restricting the search area, wherein the first restricting condition for restricting the search area is determined by evaluating the parameters in an operating state already reached during the search;

c) terminating the search in the first search direction (5, 6) if the first restricting condition for restricting the search area in step b) is satisfied;

d) then searching the global point of maximum power (MPP) in a second search direction (5, 6) by repeatedly varying the search voltage or the search current in the search area taking into account at least one second restricting condition for restricting the search area, the second restricting condition for restricting the search area being determined by evaluating the parameters in an operating state already reached during the search; and

e) terminating the search in the second search direction (5, 6) if the second restricting condition for restricting the search area in step d) is satisfied;

wherein after finishing the search the global point with the maximum determined power is set.

3. The method according to claim 2, **characterized in that** two or more restrictive conditions restricting a search area are taken into account in the search.

4. The method according to one of the preceding claims, **characterized in that** the at least one restricting condition for restricting a search area comprises an abort condition which states that there can be no prospect of an increase in power if a search direction is maintained.

5. The method according to one of the preceding claims, **characterized in that** a maximum search voltage (20) and a maximum search current (30) are taken into account when determining the search area at the starting point (4).

6. The method according to searching for one of the preceding claims, **characterized in that** the search in the first search direction is carried out as a right-sided search.

7. The method according to of the preceding claims, as far as directly or indirectly referring back to claim 2, **characterized in that** the search in the second search direction is carried out as a left-hand search.

8. The method according to one of the preceding claims, **characterized in that** the fulfilment of one of the restrictive conditions for restricting the search range is continuously re-examined during the execution of the method.

9. The method according to one of the preceding claims, **characterized in that** the at least one restricting condition for restricting a search area comprises an abort condition which states that a minimum power is undershot if a search direction is maintained.

10. The method according to one of the preceding claims, **characterized in that** the at least one restrictive condition is an abort condition which individually or combined takes into account one or more of the following parameters:

Upv := current photovoltaic generator voltage,
Ipv := current photovoltaic generator current,
Ppv := current photovoltaic generator power,
Pmin := a minimum power of the photovoltaic generator to be maintained,
Pmax := maximum power found so far during a search, and
Isuch : = maximum search current (or maximum inverter PV current),
Usuch : = maximum search voltage ,
Pnenn := nominal power of the photovoltaic generator,
ki := factor MPP current/short-circuit current of a corresponding cell type.

11. The method according to one of the preceding claims referring back to claim 2, **characterized in that** the maximum possible power in the first search direction is higher than the maximum possible power in the second search direction.

12. The method according to one of the preceding claims, **characterized in that** the respectively determined point of maximum power is stored.

13. The method according to one of the preceding claims, as far as directly or indirectly referring back to claim 1, **characterized in that** after terminating the search the point with the maximum determined power is set.

**14.** The method according to one of the preceding claims, **characterized in that** in claim 2 searching in the second search direction is omitted if a restrictive condition for restricting the search area is fulfilled.

**15.** The method according to one of the preceding claims referring back to claim 2, **characterized in that** the first restrictive condition is different from the second restrictive condition.

**16.** The method according to claim 4, wherein the power increase exceeds a specified minimum value other than zero.

**Revendications**

**1.** Procédé pour déterminer un point global de puissance maximale (MPP) d'un générateur photovoltaïque (PV) en faisant varier au moins un paramètre des deux paramètres tension de recherche et courant de recherche au moyen d'un dispositif connecté en aval du générateur photovoltaïque dans une zone de recherche maximale recherchable sur une courbe puissance/tension, comprenant les étapes de procédé suivantes :

a) Initialisation par la définition d'un point de démarrage (4) ayant une puissance de démarrage avec une tension de démarrage et un courant de démarrage ;
b) rechercher le point global de puissance maximale (MPP) dans une seule direction de recherche (5, 6) en faisant varier de façon répétée la tension de recherche ou le courant de recherche dans la zone de recherche en tenant compte d'au moins deux conditions de restriction pour restreindre la zone de recherche, au moins une des conditions de restriction pour restreindre la zone de recherche étant déterminée par évaluation des paramètres donnés dans un état de fonctionnement déjà atteint pendant la recherche ; et
c) interrompre la recherche si une des au moins deux conditions de restriction pour restreindre la zone de recherche à l'étape b) est remplie.

**2.** Procédé pour déterminer un point global de puissance maximale (MPP) de générateurs photovoltaïques (PV) en faisant varier au moins un paramètre des deux paramètres tension de recherche et courant de recherche au moyen d'un dispositif connecté en aval du générateur photovoltaïque dans une zone de recherche maximale recherchable sur une courbe puissance/tension, comprenant les étapes de procédé suivantes :

a) Initialisation par la définition d'un point de démarrage (4) ayant une puissance de démarrage avec une tension de démarrage et un courant de démarrage (étape 100) ;
b) rechercher le point global de puissance maximale (MPP) dans une première direction de recherche (5, 6) en faisant varier de façon répétée la tension de recherche ou le courant de recherche dans la zone de recherche en tenant compte d'au moins une première condition de restriction pour restreindre la zone de recherche, la première condition de restriction pour restreindre la zone de recherche étant déterminée par évaluation des paramètres donnés dans un état de fonctionnement déjà atteint pendant la recherche ;
c) interrompre la recherche dans la première direction de recherche (5, 6) si la première condition de restriction pour restreindre la zone de recherche à l'étape b) est remplie ;
d) rechercher ensuite le point global de puissance maximale (MPP) dans une deuxième direction de recherche (5, 6) en faisant varier de façon répétée la tension de recherche ou le courant de recherche dans la zone de recherche en tenant compte d'au moins une deuxième condition de restriction pour restreindre la zone de recherche, la deuxième condition de restriction pour restreindre la zone de recherche étant déterminée par évaluation des paramètres donnés dans un état de fonctionnement déjà atteint pendant la recherche ; et
e) interrompre la recherche dans la deuxième direction de recherche (5, 6) si la deuxième condition de restriction pour restreindre la zone de recherche à l'étape d) est remplie ;

dans lequel, après avoir interrompu la recherche, le point global avec la puissance maximale déterminée est fixé.

**3.** Procédé selon la revendication 2, **caractérisée en ce que** deux ou plusieurs conditions de restriction limitant une zone de recherche sont prises en compte dans la recherche.

**4.** Procédé selon l'une quelconque des revendications précédentes, **caractérisé en ce que** la au moins une condition de restriction pour restreindre une zone de recherche comprend une condition d'interruption qui déclare qu'il ne peut y avoir aucune perspective d'augmentation de puissance si une direction de recherche est maintenue.

**5.** Procédé selon l'une quelconque des revendications précédentes, **caractérisé en ce qu'**une tension de recherche maximale (20) et un courant de recherche maximal (30) sont pris en compte pour déterminer la zone de recherche au point de démarrage (4).

**6.** Procédé selon l'une quelconque des revendications précédentes, **caractérisé en ce que** la recherche dans la première direction de recherche est effectuée comme une recherche à droite.

**7.** Procédé selon l'une quelconque des revendications précédentes, tant que reliée directement ou indirectement à la revendication 2, **caractérisée en ce que** la recherche dans la deuxième direction de recherche est effectuée comme une recherche à gauche.

**8.** Procédé selon l'une quelconque des revendications précédentes, **caractérisée en ce que** le respect d'une des conditions de restriction pour restreindre la zone de la recherche est continuellement réexaminé au cours de la procédure.

**9.** Procédé selon l'une quelconque des revendications précédentes, **caractérisé en ce que** la au moins une condition de restriction pour restreindre une zone de recherche comprend une condition d'interruption indiquant qu'une puissance minimale n'est pas atteinte si une direction de recherche est maintenue.

**10.** Procédé selon l'une quelconque des revendications précédentes, **caractérisé en ce que** la au moins une condition de restriction est une condition d'interruption prenant en compte un ou plusieurs des paramètres suivants individuellement ou en liaison :

Upv := tension actuelle du générateur photovoltaïque,
Ipv := courant actuel du générateur photovoltaïque,
Ppv := puissance actuelle du générateur photovoltaïque,
Pmin := une puissance minimale du générateur photovoltaïque à maintenir,
Pmax := puissance maximale trouvée jusqu'à présent au cours d'une recherche, et
Isuch : = courant de recherche maximal (ou courant PV maximal de l'onduleur),
Usuch : = tension de recherche maximale ,
Pnenn := puissance nominale du générateur photovoltaïque,
ki := facteur courant MPP/courant de court-circuit d'un type de cellule correspondant.

**11.** Procédé selon l'une quelconque des revendications précédentes reliée à la revendication 2, **caractérisé en ce que** la puissance maximale possible dans la première direction de recherche est supérieure à la puissance maximale possible dans la deuxième direction de recherche.

**12.** Procédé selon l'une quelconque des revendications précédentes, **caractérisé en ce que** le point de puissance maximale respectivement déterminé est mémorisé.

**13.** Procédé selon l'une quelconque des revendications précédentes, tant que reliée directement ou indirectement à la revendication 1, **caractérisée en ce qu'**après l'interruption de la recherche, le point avec la puissance maximale déterminée est fixé.

**14.** Procédé selon l'une quelconque des revendications précédentes, **caractérisé en ce que** dans la revendication 2, la recherche dans la deuxième direction de recherche est omise si une condition de restriction pour restreindre la zone de recherche est remplie.

**15.** Procédé selon l'une quelconque des revendications précédentes reliée à la revendication 2, **caractérisé en ce que** la première condition de restriction est différente de la deuxième condition de restriction.

**16.** Procédé selon la revendication 4, dans lequel l'augmentation de puissance dépasse une valeur minimale spécifiée différente de zéro.

Fig. 1

# Fig. 2

EP 2 360 546 B1

Fig. 3

Fig. 4a

100

200

250

300

400

500

Fig. 4b

Fig. 5

331

Beginn der
rechtsseitigen Suche

332

Initialisierung von Pmax:
Pmax(k) = Ppv(k)

333

PV-Spannung hochsetzen

335

Bestimmung von Pmax:
Pmax(k) = max(Pmax(k-1),Ppv(k))

336

Ipv(k) < Pmax(k) / Usuch(k)
oder
maximale Suchspannung
erreicht

Nein

Ja

338

Ende der
rechtsseitigen Suche

Fig. 6a

331

Beginn der
rechtsseitigen Suche

332

Initialisierung von Pmax:
Pmax(k) = Ppv(k)

PV-Strom herabsetzen    334

Bestimmung von Pmax:
Pmax(k) = max(Pmax(k-1),Ppv(k))    335

Ipv(k) < Pmax(k) / Usuch(k)
oder
minimaler Suchstrom
erreicht    337

Nein

Ja

Ende der
rechtsseitigen Suche    338

Fig. 6b

Fig. 7

EP 2 360 546 B1

361

Beginn der
linksseitigen Suche

362

Initialisierung von Pmax:
Pmax(k) = Ppv(k)

363

PV-Spannung herabsetzen

365

Bestimmung von Pmax:
Pmax(k) = max(Pmax(k-1),Ppv(k))

366

Upv(k) < Pmax(k) / Isuch(k)
oder
minimale Suchspannung
erreicht

Nein

Ja

368

Ende der
linksseitigen Suche

Fig. 8a

**361**  Beginn der linksseitigen Suche

**362**  Initialisierung von Pmax: Pmax(k) = Ppv(k)

**364**  PV-Strom hochsetzen

**365**  Bestimmung von Pmax: Pmax(k) = max(Pmax(k-1),Ppv(k))

**367**  Upv(k) < Pmax(k) / Isuch(k) oder maximaler Suchstrom erreicht

Nein

Ja

**368**  Ende der linksseitigen Suche

Fig. 8b

Fig. 9

EP 2 360 546 B1

Fig. 10

Fig. 11a

Fig. 11b

Fig. 12

EP 2 360 546 B1

Fig. 13

EP 2 360 546 B1

Beginn der
linksseitigen Suche — 361

Initialisierung von Pmax:
Pmax(k) = Ppv(k) — 362

PV-Spannung herabsetzen — 363

Bestimmung von Pmax:
Pmax(k) = max(Pmax(k-1),Ppv(k)) — 365

Upv < Pmax /min(Pnenn/(Ustart*ku),Isuch)
oder
minimale Suchspannung
erreicht — 370

Nein

Ja

Ende der linksseitigen
Suche — 368

Fig. 14a

```
                                                        ─── 361
              ╭─────────────────────╮
              │    Beginn der       │
              │ linksseitigen Suche │
              ╰─────────────────────╯
                        │
                        ▼
                                                  ─── 362
       ┌─────────────────────────────┐
       │   Initialisierung von Pmax:  │
       │      Pmax(k) = Ppv(k)        │
       └─────────────────────────────┘
                        │
                        ▼ ◄──────────────────────────┐
                                                     │
                                              ─── 364│
       ┌─────────────────────────────┐              │
       │     PV-Strom hochsetzen      │              │
       └─────────────────────────────┘              │
                        │                            │
                        ▼                            │
                                           ─── 365   │
       ┌─────────────────────────────────┐           │
       │    Bestimmung von Pmax:          │           │
       │ Pmax(k) = max(Pmax(k-1),Ppv(k))  │           │
       └─────────────────────────────────┘           │
                        │                            │
                        ▼                            │
```

$Upv < Pmax / min(Pnenn/(Ustart*ku),Isuch)$ oder maximaler Suchstrom erreicht — 369

Nein

Ja

```
              ╭─────────────────────╮
              │ Ende der linksseitigen │
              │       Suche          │
              ╰─────────────────────╯
                                        ─── 368
```

Fig. 14b

Fig. 15

Fig. 16

Fig. 17

301

Beginn der Suche

302

Initialisierung:
Ustart = Upv

330

Rechtsseitige Suche
(gefundene maximale Leistung
wird in Pmax gespeichert)

303

Ustart * Isuch <= Pmax

Ja

Nein

360

Linksseitige Suche

305

Anfahren des Punkts maximaler
Leistung

306

Ende der Suche

Fig. 18

Fig. 19

EP 2 360 546 B1

Beginn der Suche — 301

Initialisierung:
Istart = Ipv — 312

Linksseitige Suche
(gefundene maximale Leistung
wird in Pmax gespeichert) — 360

Istart * Usuch <= Pmax — 304

Ja

Nein

Rechtsseitige Suche — 330

Anfahren des Punkts maximaler
Leistung — 305

Ende der Suche — 306

Fig. 20

Fig. 21

EP 2 360 546 B1

Fig. 22